# EUROPEAN PATENT SPECIFICATION

(11) **EP 3 480 686 B1**
(45) Date of publication and mention of the grant of the patent: **24.05.2023**
(21) Application number: 17819197.9
(22) Date of filing: 26.06.2017
(51) Int. Cl.: G06F 3/06, G06F 16/00

(54) **DATA PROCESSING METHOD, CLUSTER MANAGER, RESOURCE MANAGER AND DATA PROCESSING SYSTEM**
DATENVERARBEITUNGSVERFAHREN, CLUSTERMANAGER, RESSOURCENMANAGER UND DATENVERARBEITUNGSSYSTEM
PROCÉDÉ DE TRAITEMENT DE DONNÉES, GESTIONNAIRE DE GRAPPES, GESTIONNAIRE DE RESSOURCES ET SYSTÈME DE TRAITEMENT DE DONNÉES

(30) Priority: 29.06.2016 CN 201610494245
(43) Date of publication of application: 08.05.2019
(73) Proprietor: ZTE Corporation, Shenzhen, Guangdong 518057 (CN)
(72) Inventor: ZHANG, Zongyu, Shenzhen Guangdong 518057 (CN); DING, Yan, Shenzhen Guangdong 518057 (CN); XU, Yiliang, Shenzhen Guangdong 518057 (CN); GUO, Longbo, Shenzhen Guangdong 518057 (CN)
(74) Representative: Aipex B.V.
(86) International application number: PCT/CN2017/090001
(87) International publication number: WO 2018/001200

(56) References cited:
- CN-A- 103 473 334
- CN-A- 103 580 898
- CN-A- 104 407 807
- CN-A- 105 069 149
- US-A1- 2013 290 249
- US-A1- 2014 359 058
- US-A1- 2016 080 490

## Description

### TECHNICAL FIELD

The present invention relates to, but is not limited to, the communication field, in particular, to a data processing method, a cluster manager, a resource manager in a data processing system.

### BACKGROUND

Since a distributed database relates to a large number of distributed nodes, the data amount supported in the distributed database is much larger than that in a standalone database. Therefore, the distributed database also confronts with a data redistribution problem which is different from that of the standalone database.

However, the implementation of data redistribution confronts with many difficulties, one of key difficulties is how to implement online redistribution, that is, how to implement the data redistribution for the database without interrupting service.

At present, there are two main ways to the data redistribution, one is simple offline redistribution, and the other is sharding in advance. However, incremental data of the data redistribution under these models has obvious defects and limitations.

At present, the most commonly used online redistribution mode for the distributed database is data pre-distribution. The data distribution rule needs to be designed in advance for this mode. That is, a table, when is designed, is split into a large number of pre-allocation tables which are put into different databases, and a certain piece or several pieces of data is migrated and replicated to a specified node when the tables need to be redistributed.

For the later incremental data of the online redistribution under this architecture, since the data redistribution is implemented in sharding (base), data belongs to this base is exported by an original tool of the database and sent to a new node to perform a data play back.

However, the incremental data in this mode has an obvious limitation.

The incremental data in this mode can only be performed as a whole for a certain base. The data needs to be split in advance according to data characteristics, and the routing rule needs to be specified. Such design, if unreasonable, may lead to some huge databases. If a database itself has mass data, the data redistribution for this database cannot be implemented in this way. Further relevant technologies are also known from US 2014/359058 A1 (KARNAWAT RAKSHIT [IN] ET AL) 4 December 2014 (2014-12-04), which relates to a method and system for a nondisruptive migration of a source virtual storage system from a source cluster to a destination cluster, US 2013/290249 A1 (MERRIMAN DWIGHT [US] ET AL) 31 October 2013 (2013-10-31), which relates to systems and methods are provided for managing asynchronous replication in a distributed database environment, CN 103473334 A (ZHEJIANG SUPCON TECHNOLOGY CO) 25 December 2013 (2013-12-25), which relates to a data storage method, and CN 105069149 A (UNIV ELECTRONIC SCIENCE & TECH) 18 November 2015 (2015-11-18), which relates to a structured line data-oriented distributed parallel data importing method.

### SUMMARY

The feature of the method and apparatus according to the present invention are defined in the independent claims. Further improvements are provided in the dependent claims.

The following is a summary of the subject matter described in detail in the present invention. This summary is not intended to limit the scope of the claims.

Embodiments of the present invention provide a data processing method, a cluster manager, a resource manager and a data processing system, so that when a database has massive data, data redistribution can also be implemented.

A data processing method, applied to a distributed database comprising a cluster manager and at least one resource manager, wherein the method is performed by the cluster manager and comprises: receiving a data redistribution request; instructing, according to the data redistribution request, a first resource manager to split original data stored in a first node and import each split sub-original-data into a corresponding second node, wherein the first resource manager is configured to manage data stored in the first node; instructing the first resource manager to import incremental data, which is stored in the first node during splitting and importing processes, into a corresponding second node; wherein the import incremental data is determined by the first resource manager after each split sub-original-data is imported into the corresponding second node; and receiving a first check value, import time and an import result of the incremental data which are sent from the first resource manager, and receiving a second check value of the incremental data which is sent from a second resource manager, wherein the second resource manager is configured to manage data stored in the second node; in response to determining that the import result is successful, determining whether the first check value and the second check value are the same; and performing the following processes: in response to determining that the first check value and the second check value are different, re-instructing the first resource manager to import the incremental data into the corresponding second node; in response to determining that the first check value and the second check value are the same, determining whether the import time is less than a predetermined threshold; in response to determining that the import time is less than the predetermined threshold, controlling the first node not to store new data and instructing the first resource manager to import data which is stored in the first node and not imported into the second node into the corresponding second node; and in response to determining that the import time is greater than or equal to the predetermined threshold, returning to the step of instructing the first resource manager to import the data which is stored in the first node and not imported into the corresponding second node into the corresponding second node, and repeatedly performing the step until time needed to import the data which is not imported into the corresponding second node into the corresponding second node is less than the predetermined threshold; wherein the first check value of the incremental data is calculated by the first resource manager through: acquiring a database transaction log of the first node according to a position backed up last time or played back last time, obtaining Structured Query Language, SQL, statements by filtering the database transaction log, and acquiring the incremental data by using the SQL statements to calculate the first check value, and the second check value of the incremental data is calculated by the second resource manager through: generating SQL query statements for querying data in the second node according to an incremental data check request, acquiring the incremental data by using the generated SQL statements to calculate the second check value; wherein the import time of the incremental data is time used for importing the incremental data stored in the first node into the corresponding second node; wherein the import result is used for indicating whether importing the incremental data stored in the first node into the corresponding second node is successful; wherein the first check value and the second check value of the incremental data are used by the cluster manager to verify the data integrity of the incremental data imported from the first resource manager into the second node.

A data processing method, applied to a distributed database comprising a cluster manager and at least one resource manager, wherein the method is performed by the resource manager and comprises: receiving a data redistribution instruction sent from a cluster manager; splitting, according to the data redistribution instruction, original data stored in a first node and importing each split sub-original-data into a corresponding second node; receiving an incremental instruction sent from the cluster manager; importing, according to the incremental instruction, incremental data which is stored in the first node during splitting and importing processes into a corresponding second node; determining a first check value of the incremental data, import time of the incremental data, and an import result of importing the incremental data into the second node; sending the first check value, the import time and the import result to the cluster manager; after sending the first check value, the import time and the import result to the cluster manager, further comprising: receiving an incremental reimporting instruction from the cluster manager, and repeating, according to the incremental reimporting instruction, a process of importing the incremental data into the corresponding second node; receiving a stop instruction from the cluster manager, stopping the first node storing new data according to the stop instruction, and importing data which is stored in the first node and has not been imported into a corresponding second node into the corresponding second node; and receiving a repetition importing instruction from the cluster manager; and returning, according to the repetition importing instruction , to the step of importing the data which is stored in the first node and has not been imported into the corresponding second node into the corresponding second node, and repeatedly performing the step until time needed to import the data which has not been imported into the corresponding second node into the corresponding second node is less than a predetermined threshold; wherein the first check value of the incremental data is calculated by the first resource manager through: acquiring a database transaction log of the first node according to a position backed up last time or played back last time, obtaining Structured Query Language, SQL, statements by filtering the database transaction log, and acquiring the incremental data by using the SQL statements to calculate the first check value; wherein the import time of the incremental data is time used for importing the incremental data stored in the first node into the corresponding second node; wherein the import result is used for indicating whether importing the incremental data stored in the first node into the corresponding second node is successful; wherein the first check value of the incremental data is used by the cluster manager to verify the data integrity of the incremental data imported from the first resource manager into the second node.

A cluster manager in a distributed database, comprising: a first receiving module, which is configured to receive a data redistribution request; a first instructing module, which is configured to instruct, according to the data redistribution request, a first resource manager in the distributed database to split original data stored in a first node and import each split sub-original-data into a corresponding second node, wherein the first resource manager is configured to manage data stored in the first node; a second instructing module, which is configured to instruct the first resource manager to import incremental data which is stored in the first node during splitting and importing processes into a corresponding second node; wherein the import incremental data is determined by the first resource manager after each split sub-original-data is imported into the corresponding second node; and a first processing module, which is configured to: receive, after instructing the first resource manager to import the incremental data which is stored in the first node during the splitting and importing processes into the second node corresponding to the incremental data, a first check value, import time and an import result of the incremental data from the first resource manager, and receive a second check value of the incremental data from a second resource manager in the distributed database, wherein the second resource manager is configured to manage data stored in the second node; in response to determining that the import result is successful, determine whether the first check value and the second check value are the same; and perform the following processes: in response to determining that the first check value and the second check value are different, re-instructing the first resource manager to import the incremental data into the corresponding second node; in response to determining that the first check value and the second check value are the same, determining whether the import time is less than a predetermined threshold; in response to determining that the import time is less than the predetermined threshold, controlling the first node not to store new data and instructing the first resource manager to import data which is stored in the first node and not imported into the second node into the corresponding second node; and in response to determining that the import time is greater than or equal to the predetermined threshold, returning to the step of instructing the first resource manager to import the data which is stored in the first node and not imported into the corresponding second node into the corresponding second node, and repeatedly performing the step until time needed to import the data which is not imported into the corresponding second node into the corresponding second node is less than the predetermined threshold; wherein the first check value of the incremental data is calculated by the first resource manager through: acquiring a database transaction log of the first node according to a position backed up last time or played back last time, obtaining Structured Query Language, SQL, statements by filtering the database transaction log, and acquiring the incremental data by using the SQL statements to calculate the first check value, and the second check value of the incremental data is calculated by the second resource manager through: generating SQL statements for querying data in the second node according to an incremental data check request, acquiring the incremental data by using the generated SQL statements to calculate the second check value; wherein the import time of the incremental data is time used for importing the incremental data stored in the first node into the corresponding second node; wherein the import result is used for indicating whether importing the incremental data stored in the first node into the corresponding second node is successful; wherein the first check value and the second check value of the incremental data are used by the cluster manager to verify the data integrity of the incremental data imported from the first resource manager into the second node.

A resource manager in a distributed database, comprising: a second receiving module, which is configured to receive a data redistribution instruction from a cluster manager in the distributed database; a first importing module, which is configured to split, according to the data redistribution instruction, original data stored in a first node and import each split sub-original-data into a corresponding second node; a third receiving module, which is configured to receive an incremental instruction from the cluster manager; a second importing module, which is configured to import, according to the incremental instruction, incremental data which is stored in the first node during splitting and importing processes into a corresponding second node; and a second processing module, which is configured to determine, after importing the incremental data which is stored in the first node during the splitting and importing processes into the second node corresponding to the incremental data according to the incremental instruction, a first check value of the incremental data, import time of the incremental data, and an import result of importing the incremental data into the second node; and send the first check value, the import time and the import result to the cluster manager; a third processing module, which is configured to: receive an incremental reimporting instruction from the cluster manager after sending the first check value, the import time and the import result to the cluster manager, and repeating, according to the incremental reimporting instruction, the process of importing the incremental data into the second node corresponding to the incremental data; receive a stop instruction from the cluster manager, stop the first node storing new data according to the stop instruction, and import data which is stored in the first node and not imported into a corresponding second node into the corresponding second node; and receive a repetition importing instruction from the cluster manager; and return, according to the repetition importing instruction, to the step of importing the data which is stored in the first node and not imported into the corresponding second node into the corresponding second node, and performing the step until time needed to import the data which is not imported into the corresponding second node into the corresponding second node is less than a predetermined threshold; wherein the first check value of the incremental data is calculated through: acquiring a database transaction log of the first node according to a position backed up last time or played back last time, obtaining Structured Query Language, SQL, statements by filtering the database transaction log, and acquiring the incremental data by using the SQL statements to calculate the first check value; wherein the import time of the incremental data is time used for importing the incremental data stored in the first node into the corresponding second node; wherein the import result is used for indicating whether importing the incremental data stored in the first node into the corresponding second node is successful; wherein the first check value of the incremental data is used by the cluster manager to verify the data integrity of the incremental data imported from the first resource manager into the second node.

A data processing system, comprising a cluster manager and a first resource manager as provided by the embodiments of the present invention, wherein the cluster manager is connected to the first resource manager.

The online data distribution adopted in the embodiments of the present invention avoids service interruption. Additionally, in the redistribution of the incremental data, redistribution may be only performed on the incremental data rather than on a whole database in which the incremental data is located, thereby ensuring the implementation of the data redistribution when the database has the huge data. Therefore, when the database has the huge data, the implementation of the data redistribution can also be achieved without interrupting service.

Other aspects can be understood after the accompanying drawings and detailed description are read and understood.

### BRIEF DESCRIPTION OF DRAWINGS

In the following drawings, FIGS. 1 and 4-7 are not according to the invention and are for present for illustration only.
FIG. 1 is a hardware block diagram of a computer terminal of a data processing method not part of the invention;
FIG. 2 is a flowchart of a data processing method according to an embodiment of the present invention;
FIG. 3 is a flowchart of another data processing method according to an embodiment of the present invention;
FIG. 4 is a timing sequence diagram of an increment during an online redistribution of a distributed database not part of the invention;
FIG. 5 is a schematic diagram illustrating an increment of a redistribution of regional payment records not part of the invention;
FIG. 6 is a schematic diagram illustrating an increment of a redistribution of bullet train ticket records not part of the invention;
FIG. 7 is a schematic diagram of incremental data and check of an online redistribution of a distributed database not part of the invention;
FIG. 8 is a block diagram of a data processing device according to an embodiment of the present invention; and
FIG. 9 is a block diagram of another data processing device according to an embodiment of the present invention.

### DETAILED DESCRIPTION

The present invention will be described hereinafter in detail through embodiments with reference to the accompanying drawings. It is to be noted that if not in collision, the embodiments and features therein in the present invention can be combined with each other.

It is to be noted that the terms "first", "second" and the like in the description, claims and drawings of the present invention are used to distinguish between similar objects and are not necessarily used to describe a particular order or sequence.

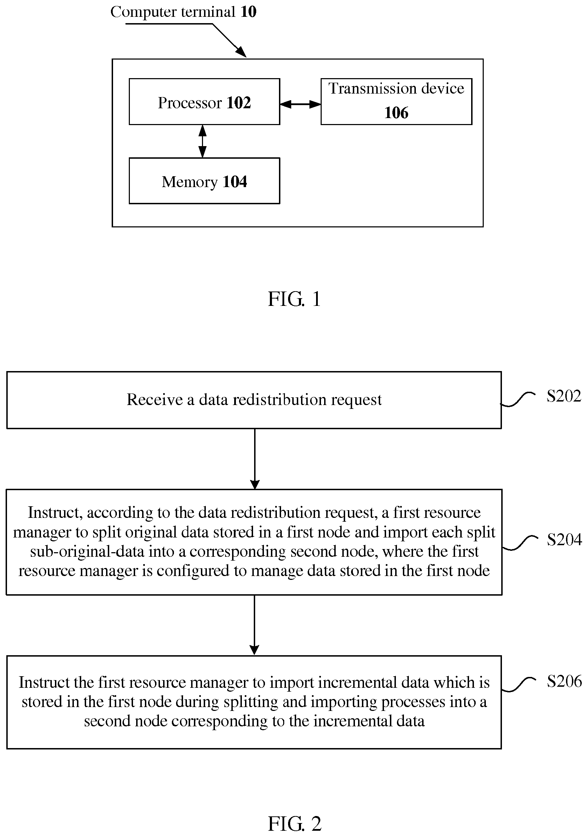

FIG. 1 and the description thereof relate to an example not part of the invention.

In one embodiment, a data processing method of the present invention may be executed on a mobile terminal, a computer terminal and the like. In a case of executing on the computer terminal, FIG. 1 is a diagram showing the hardware structure of the computer terminal of the data processing method according to an embodiment not part of the present invention. As shown in FIG. 1, the computer terminal 10 may include one or more (only one is shown in FIG. 1) processors 102 (the processor 102 may include, but is not limited to, a microprocessor MCU or a programmable logic device FPGA, etc.) a memory 104 for storing data, and a transmission device 106 for communication function. It will be understood by those of ordinary skill in the art that the structure shown in FIG. 1 is merely exemplary, and not intended to limit the structure of the electronic device described above. For example, the computer terminal 10 may further include more or less components than the components shown in FIG. 1, or has a configuration different from the configuration shown in FIG. 1.

The memory 104 may be configured to store software programs and modules of application software, such as program instructions or modules corresponding to the data processing method in the embodiments of the present invention. The processor 102 executes the software programs and modules stored in the memory 104 to perform function applications and data processing, to implement the method described above. The memory 104 may include a high-speed random access memory and a nonvolatile memory, such as one or more magnetic memories, a flash memory or other nonvolatile solid-state memories. In some examples, the memory 104 may further include memories that are remotely disposed with respect to the processor 102. These remote memories may be connected to the computer terminal 10 via a network. Examples of such networks include, but are not limited to, the Internet, intranets, local area networks, mobile communication networks, and combinations thereof.

The transmission device 106 is configured to receive and send data via a network. The examples of such network may include a wireless network provided by a communication provider of the computer terminal 10. In one example, the transmission device 106 includes a Network Interface Controller (NIC), which may be connected to other network devices via a base station, thereby communicating with the Internet. In one example, the transmission 106 may be a Radio Frequency (RF) module, which is configured to communicate with the Internet via a wireless means.

This embodiment provides a data processing method executing on the computer terminal described above. FIG. 2 is a flowchart of the data processing method according to an embodiment of the present invention. As shown in FIG. 2, the process of the method includes steps described below.

In step S202, a data redistribution request is received;

In step S204, a first resource manager is instructed, according to the data redistribution request, to split original data stored in a first node and import each split sub-original-data into a second node corresponding to the each sub-original-data. The first resource manager is configured to manage data stored in the first node.

In step S206, the first resource manager is instructed to import incremental data which is stored in the first node during splitting and importing processes into a second node corresponding to the incremental data.

Operations described above are performed by a cluster manager. The cluster manager may receive cluster relevant requests of an upper service (such as the data redistribution request described above), and manage distributed clusters, coordinates the status reports of database (DB) of resource managers, and notifies the resource managers to perform commands such as switching, backup, and redistribution. The first resource manager described above is usually an upper agent of the database (including the first node described above), and is a local database monitor program that performs complex operations on the database in response to an upper request. In this embodiment of the present invention, the first resource manager is configured to perform a redistribution process in response to a redistribution request of the cluster manager. The first node and the second node are both basic nodes configured to store data.

Online data redistribution adopted in the steps described above avoids service interruption, and in the redistribution of the incremental data, only the incremental data is redistributed instead of performing an overall redistribution on the database in which the incremental data is located, thereby ensuring the implementation of the data redistribution when the database has mass data. Therefore, when the database has mass data, the implementation of the data redistribution can also be achieved without interrupting service.

In one embodiment, the step of instructing the first resource manager to the import incremental data which is stored in the first node during the splitting and importing processes into the second node corresponding to the incremental data includes the steps described below. A logical transaction log of the second node corresponding to the incremental data after sub-original-data is imported into the second node is acquired. The logical transaction log is used for describing information of the sub-original-data stored in the second node. An incremental instruction is sent to the first resource manager according to the logical transaction log. The incremental instruction is used for instruction the first resource manager to determine the incremental data which is stored in the first node during the splitting and importing processes according to the logical transaction log, and import the incremental data into the second node corresponding to the incremental data. In this embodiment, the first resource manager determines, according to the logical transaction log, which data in the first node is backed up in the second node, thereby determining data which is not backed up, that is, determining the incremental data.

In one embodiment, after the step of instructing the first resource manager to import the incremental data which is stored in the first node during the splitting and importing processes into the second node corresponding to the incremental data, the method further includes the steps described as below. A first check value, an import time and an import result of the incremental data which are sent from the first resource manager are received. A second check value of the incremental data which is sent from a second resource manager is received. The second resource manager is configured to manage data stored in the second node. When the import result is determined to be successful, whether the first check value and the second check value are the same is determined. When the first check value and the second check value are determined to be different, a process of instructing the first resource manager to import the incremental data into the second node corresponding to the incremental data is repeated.

And/or, when the first check value and the second check value are determined to be the same, whether the import time is less than a predetermined threshold is determined. When the import time is less than the predetermined threshold, the first node is controlled to stop storing new data and the first resource manager is instructed to import data stored which is in the first node and not imported into the second node into a corresponding second node. And/or, when the import time is greater than or equal to the predetermined threshold, the method returns to the step of instructing the first resource manager to import the data stored in the first node and not imported into the corresponding second node into the corresponding second node, and this step is being performed until a time of importing the data not imported into the corresponding second node into the corresponding second node is less than the predetermined threshold.

In this embodiment, when the import time is greater than or equal to the predetermined threshold, it indicates that the amount of data newly stored in the first node is large. To ensure the service continuity, the above- mentioned process of importing data which is newly stored in the first node and not imported into the second node into the second node is performed cyclically (the cyclic process includes the steps of determining the imported result, comparing two check values and determining the imported time. That is, each cycle is a new incremental operation on the data stored in the first node and not imported into the second node), and during the cyclic process, when each cycle is finished, the operation of controlling the first node to stop storing the new data and instructing the first resource manager to import the data stored in the first node and not imported into the second node into the second node is also performed.

In the embodiment described above, before receiving the second check value of the incremental data sent from the second resource manager, the steps described below are performed. An incremental data check request is sent to the second resource manager. The incremental data check request carries the logical transaction log. In the second resource manager, a query statement for querying data in the second node is generated according to the incremental data check request, so that data is acquired and a check values is calculated, and the calculated check value is returned.

The embodiment described above is mainly described from the perspective of the cluster manager. It can be seen from the above embodiment that the data redistribution method of the embodiment of the present invention no longer needs to analyze the data in advance, and no longer needs to worry about the unreasonable design problem of a data distribution rule, and also does not need to design distribution rules for base-level data. As long as ensuring the load balancing of each node, a distribution rule can be reasonable designed for the each node simply based on the current scene. Additionally, once a certain table of a certain node is too large and the redistribution is needed, the cluster manager is notified by a client, and controls a resource manager of each DB to perform the redistribution process. In the online state, original data of the table is exported, and resplit according to a newest distribution rule, and imported into new data nodes. After the completion of the above-mentioned redistribution of total original data, the incremental data process begins. The cluster manager collects an incremental result of each node, and performs an incremental check process on the new node. The cluster manager compares the check value of the new node with the check value of the old node to perform the incremental check.

The data redistribution in the related art does not support the incremental data check, and the later increment is parsed and played back by directly using an original tool of the database in the related art. Thus there is no way to check whether the new incremental data is correct, thereby leading a data corruption during the data redistribution process, and affecting the subsequent normal service. A data check operation is added in the embodiment of the present invention. The first check value of the incremental data reported by the first resource manager is compared with the second check value of the incremental data reported by the second resource manager, whether the redistribution data is correctly imported into the second node is determined, thereby ensuring the data integrity and ensuring the normal operation of subsequent service.

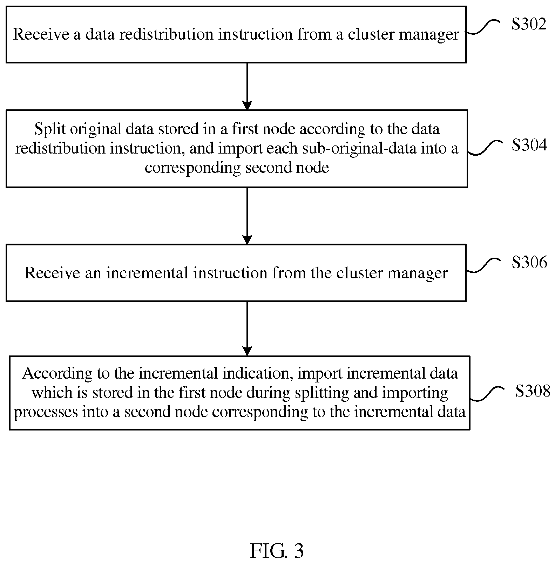

FIG. 3 is a flowchart of another data processing method according to an embodiment of the present invention. As shown in FIG. 3, the method includes steps described below.

In step S302, a data redistribution instruction from a cluster manager is received.

In step S304, according to the data redistribution instruction, original data stored in a first node is split and each split sub-original-data is imported into a second node corresponding to the sub-original-data.

In step S306, an incremental instruction from the cluster manager is received.

In step S308, according to the incremental instruction, incremental data which is stored in the first node during splitting and importing processes is imported into a second node corresponding to the incremental data.

Operations described above are performed by a first resource manager for managing data in the first node.

With the above steps, online data redistribution is adopted, thereby avoiding service interruption. In addition, in the redistribution of the incremental data, only the incremental data is redistributed rather than the entire database in which the incremental data is located, thereby ensuring the implementation of the data redistribution when the database has massive data. Therefore, the service interruption is avoided, and the data redistribution is implemented when the database has massive data.

In one embodiment, the step of splitting, according to the data redistribution instruction, the original data stored in a first node and importing each split sub-original-data into the second node corresponding to the sub-original-data includes the steps described below. The original data is exported from the first node according to the data redistribution instruction. The original data is split according to a data distribution rule. The original data is split into multiple files. One file corresponds to one second node. The multiple files are uploaded to second nodes corresponding to the multiple files respectively to perform importing. In this embodiment, the above-mentioned split rule may be flexibly adjusted. With the operation of the distributed database, there will be more and more data in the database. Once the split rule which is determined previously is found to be problematic, the split rule may be adjusted at any time. And the split rule may correspond to the distribution rule of the original data. Therefore, the distribution rule of the original data may be flexibly adjusted.

In one embodiment, the step of importing, according to the incremental instruction, the incremental data which is stored in the first node during the splitting and importing processes into the second node corresponding to the incremental data includes the steps described below. According to a logical transaction log carried by the incremental indication, the incremental data is determined. The logical transaction log is used for describing information of sub-original-data stored in the second node. According the incremental data, a data manipulation language (DML) statement is generated. The incremental data is imported, by using the DML statement, into the second node corresponding to the incremental data. In this embodiment, when the DML statement is generated, an original DML statement for importing data into the first node may be first generated. Then the original DML statement is modified to obtain the above-mentioned DML statement. The modification in the original DML statement mainly includes that, an old node name (namely, the name of the first node) is substituted by a new node name (namely, the name of the second node) and a new distribution field for pointing to the second node is specified after "where". In this embodiment, when the incremental data is imported into the second node corresponding to the incremental data by using the DML statement, a temporary connection may be first established with the second node, and the generated DML statement is executed after the connection is established.

In one embodiment, after the step of importing the incremental data which is stored in the first node during the splitting and importing processes into the second node corresponding to the incremental data according to the incremental instruction, the method further includes the steps described below. A first check value of the incremental data, an import time and an import result of importing the incremental data into the second node are determined. And the first check value, the import time and the import result are sent to the cluster manager. In this embodiment, after the first check value, the import time and the import result are sent to the cluster manager, the cluster manager performs, according to the import result, the first check value and the import time, a relevant verification (in the verification of the check value, the check value needs to be verified in combination with a second check value from the second resource manager) and determination operation. The actual operations have been described in the above embodiments, and will not be repeated here.

In one embodiment, the first check value, the import time and the import result are used by the cluster manager to perform the relevant verification and determination operation. Additionally, according to different verification and/or determination results, different instructions sent by the cluster manager are received, which includes the steps described below. An incremental reimporting instruction from the cluster manager is received, and the process of importing the incremental data into the second node corresponding to the incremental data is repeated according to the incremental reimporting instruction. And/or, a stop instruction from the cluster manager is received, the first node is stopped storing new data according to the stop instruction, and data which is stored in the first node and not imported into a corresponding second node is imported into the corresponding second node. And/or, a repetition importing instruction from the cluster manager is received, a step of importing the data stored in the first node and not imported into the corresponding second node into the corresponding second node is performed according to the repetition importing instruction until a time of importing the data not imported into the corresponding second node into the corresponding second node is less than a predetermined threshold. In this embodiment, when the cyclic operation is stopped, the stop instruction from the cluster manager may also be received. The first node stops storing new data according to the stop instruction, and the data stored in the first node and not imported into the corresponding second node is imported into the corresponding second node.

FIG. 3 and the embodiment related to FIG. 3 are described from the perspective of the first resource manager. It can be seen from the above embodiment that when performing the incremental data process, a resource manager (namely, the first resource manager) first acquires a database transaction log of an old node (namely, the first node), a transaction log block is screened according to a position backed up last time or played back last time, and Structured Query Language (SQL) statements related to an old table are screened and obtained. The SQL statements are connected to the database to acquire data is acquired and calculate an incremental check value. Then these SQL statements are reconstructed according to a new table name, a new distribution rule and other node information, and the reconstructed SQL statements are sent to corresponding machines and are concurrently performed. A play back result, a check value and a play back time are reported to the cluster manager. After receiving an incremental check request from the cluster manager, a new node (corresponding to the second node) may acquire SQL statements played back this time by the starting and ending positions of the increment play back this time in the transaction log, thereby acquiring relevant data to calculate the check value and reporting the check value to the cluster manager.

An embodiment of the present invention provides a data processing method, which includes steps described below.

An incremental data check request sent from a cluster manager is received.

A second check value of incremental data in the second node is acquired according to the incremental data check request.

The second check value is sent to the cluster manager.

Operations described above are performed by a second resource manager for managing data in the second node.

The second check value is used by the cluster manager to verify whether the incremental data imported from the first resource manager into the second node is correct, thereby ensuring the data integrity.

In one embodiment, when the second check value of the incremental data in the second node is acquired according to the incremental data check request, a query statement for querying data in the second node is generated first according to the incremental data check request, so that the incremental data is acquired by using the query statement and the check value is calculated.

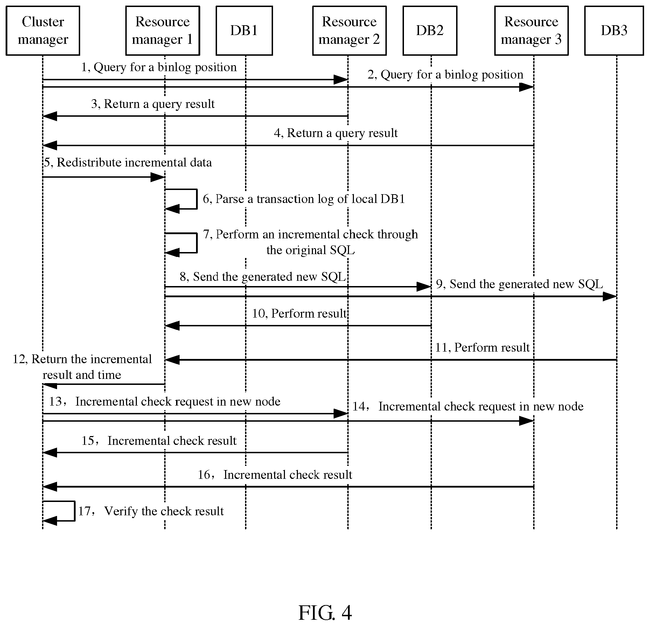

FIG. 4 and the description thereof relate to an example not part of the invention.

The data processing of the embodiment not part of the present invention will be described hereinafter in conjunction with FIG. 4 from the perspective in which a cluster manager, a first resource manager and a second resource manager are taken as a whole. The overall process includes steps described below.

In a first step, after receiving the data redistribution request, the cluster manager exports full amount of data in a table that need to be redistributed, and splits the table according to a distribution rule, uploads split files to corresponding nodes to import the files to the corresponding nodes, and completes the redistribution of original full amount of data of the table.

In a second step, services still submit data on the original node during the redistribution process of the original full amount of data, so data submitted to the original node in this period needs to be migrated to a new node. A cluster controller first queries a current logical transaction log (binlog) position of each new node and records these logical transaction log positions (corresponding to steps 1, 2, 3 and 4 in FIG. 4), then sends an incremental request to a resource controller (corresponding to step 5 in FIG. 4) of an old node. The resource controller scans, according to a backup position, the logical transaction log and filters the logical transaction log to obtain corresponding SQL statements, acquires data through the corresponding SQL statements and calculates the check value(corresponding to steps 6 and 7 in FIG. 4), and modifies SQL statements according to a new distribution rule and calculates a corresponding node of each SQL statement.

In a third step, the new SQL statements are concurrently played back on their corresponding new nodes (corresponding to steps 8 and 9 in FIG. 4), after the play backs are completed, play back times, play back results and the check value are calculated and reported to the cluster manager (corresponding to steps 10, 11 and 12 in FIG. 4).

In a fourth step, after receiving a reply, the cluster manager initiates the incremental check request of this round to the new nodes (corresponding to steps 13 and 14 in FIG. 4).

In a fifth step, after receiving the check request, the resource manager acquires the SQL statements of this incremental data by the transaction log position before the increment, acquires data by connecting DB, calculate the check value, and replies to the cluster manager (corresponding to steps 15 and 16 in FIG. 4).

In a sixth step, the resource manager compares the check value of the new node with the check value of the old node to determine that whether the incremental data is correct, and start the process for next increment. According to the play back result, whether to perform a table lock operation and a last incremental operation is determined (corresponding to step 17 in FIG. 4).

The reliability and universality of the online redistribution of the distributed database can be ensured by the steps described above, thereby ensuring the maintainability and data security of the distributed database.

The embodiments of the present invention will be described hereinafter in detail with reference to different databases.

### Embodiment 1

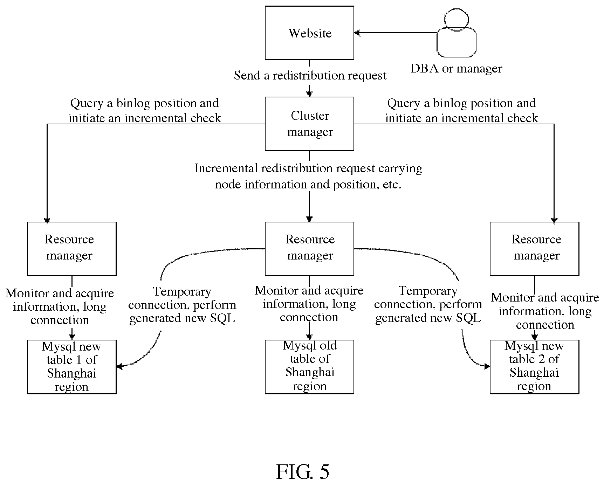

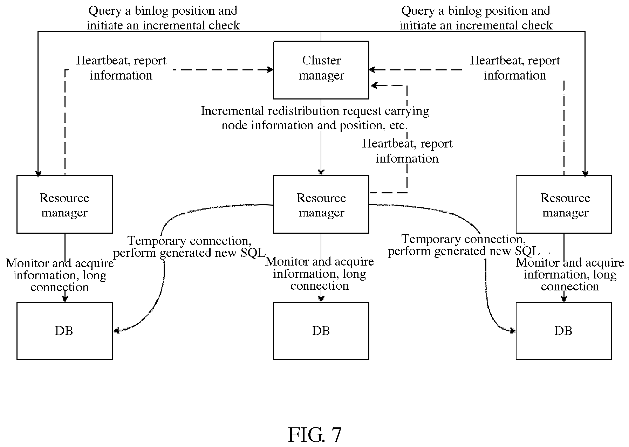

FIGS. 5 and 7 and the description thereof relate to an example not part of the invention.

An online payment system based on a MySQL distributed cluster database will be described in this embodiment in conjunction with FIG. 5.

In this system, assuming that payment records are saved in tables according to regions, when the payment records or payment accounts rise suddenly in a certain region, data amount of a certain table is increased to an extent that data redistribution is needed. At this time, the distributed database needs the online redistribution, and payment information in this region is split according to a new distribution rule.

In this embodiment, using the payment records in Shanghai region as an example, it is assumed that all payment records related to the Shanghai region are saved in an independent table before the redistribution. Once data of the Shanghai region has been accumulated or is suddenly exploded, the table is unable to withstand so much data and data needs to be redistributed. The redistribution after modifying the original Hash distribution rule (in this example, a node position where data is located is determined according to the region field, for example, the payment records in Shanghai region are stored by a cluster manager to a table ShanghaiPayRecord at a node 1, the payment records in Nanjing region are stored by the cluster manager to a table NanjingPayRecord at a node 2) is expected to make data of the node (Shanghai region) to tables at multiple nodes.

In this redistribution, original data of the table of Shanghai region is redistributed according to a new formulated distribution rule (for example, the hash distribution rule is used according to administrative districts of Shanghai region, for example, the payment records in Putuo District are distributed to a PutuoPayRecord table or a ShanghaiPayRecord1 table of the node 1, and so on), that is, data is exported from the original table of Shanghai region by an export command mysqldump of MySQL, then a resource manager splits all the records of a data file into multiple files according to the new distribution rule. One file corresponds to one node. The files are respectively imported into MySQL database nodes (the tables have been built in advance) to which new tables belong under the new rule. The redistribution operation of original data of original payment records is completed.

After this step, the process of online incremental data begins. New payment records of Shanghai region generated during the previous redistribution are distributed to new table nodes. The cluster manager sends an incremental request to the resource manager of a node corresponding to an old table of Shanghai region, including a position that a last round redistribution data is restored.

After receiving an online incremental request, the resource manager sequentially analyzes, according to the position sent by the cluster manager and indicating where the last round redistribution data is restored, binlog files of transaction log MySQLs, acquires data of payment records, and calculates a check value of these data. DML statements are generated based on these data. An old table name is substituted by a new table name. New distribution fields are specified after "where". In this way, new DML statements are established and separately saved in different files according to the nodes, the new distribution rule and the new distribution fields. Finally these new DML statements are sent to nodes corresponding the new tables and performed at these nodes, thereby completing the redistribution of payment data in the old table of Shanghai region. The check value of this round data, an incremental result and an incremental time of this round are sent to the cluster manager. A check operation may refer to FIG. 7.

The cluster manager initiates an incremental data check request of this round to the resource managers of the nodes of these new table, which carries a binlog position queried before this round increment.

After receiving the incremental data check request, the resource manager of new node analyzes, according to the position sent by the cluster manager and table name, a binlog log to generate a SQL query statement, acquires data, calculates the check value and sends the check value to the cluster manager.

The cluster manager compares the check value of the new node with the check value of the old node. If the check values are different, this play back is failure and a new play back is acquired. Otherwise, the cluster manager will determine the incremental time of this round. If the incremental time is less than an incremental threshold, the cluster manager notifies the resource manager to perform a table lock operation to complete a last round incremental operation. Otherwise, a new round incremental operation will be performed, and the incremental operation is performed until the incremental time of a certain round is less than the incremental threshold.

### Embodiment 2

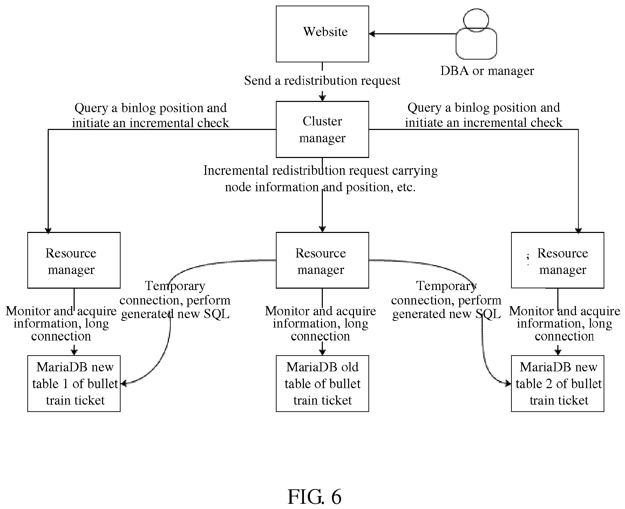

FIG. 6 and the description thereof relate to an example not part of the invention.

An online ticketing system based on a MariaDB distributed cluster database will be described in this embodiment in conjunction with FIG. 6.

In this system, assuming that ticketing records are saved according to bill types, when the ticketing records of a ticket type rise suddenly or the number of ticketing accounts is increasing. Data amount that a certain table withstands is increased to an extent that redistribution is required. At this time, the online redistribution operation of the distributed database needs to be performed and ticketing information of this ticket type is split according to a new distribution rule (for example, split according to destinations).

In this embodiment, using bullet train ticket as an example, it is assumed that all ticketing records of the bullet train are saved in an independent table before the redistribution. Once data of the bullet train ticket has been accumulated or suddenly exploded, the table is unable to withstand so much data and needs to be redistributed. The redistribution after the distribution rule is modified (in this embodiment, a node position where data is located is determined according to the content of ticket type, for example, the ticketing records of the bullet train ticket correspond to a table DongcheRecord at a node 1, the ticketing records of high-speed train ticket correspond to a table GaotieRecord at a node 2) is expected to make the bullet train ticket data which was stored at one node distributed to tables at multiple nodes.

In this redistribution, firstly, original data of a table of bullet train is distributed according to a new formulated distribution rule (for example, the data is hash distributed according to the destinations, for example, the bullet train ticketing records to Nanjing are distributed to a DongcheRecordOfNanjing table at the node 1 by a cluster manager, and so on), that is, data is exported from the original table of bullet train tickets by an export command mysqldump of MySQL, then the resource manager partitions all the purchasing records of a data file into multiple files according to the new distribution rule. One file corresponds to one node. The files are separately imported into MariaDB database nodes (the tables has been built in advance) to which new tables belong under the new rule. The redistribution operation of original data of bullet train tickets is completed.

After completing this step, the process of online incremental data begins. New ticketing records of the bullet train ticket generated during the previous redistribution are distributed to nodes of the new tables. The cluster manager sends an incremental request to the resource manager of a node corresponding to the old bullet train ticket table, including a position where a last round redistribution data restores.

After receiving an online incremental request, the resource manager sequentially analyzes, according to the position sent by the cluster manager and indicating where the last round redistribution data is restored, binlog files of transaction logs MariaDB, acquires data of ticketing records, and calculates a check value for all columns of these data. DML statements are generated using these data. An old table name is substituted by a new table name. New distribution fields are specified after "where". In this way, new DML statements are established and respectively saved in different files according to the nodes, the new distributed rule and the new distribution fields. Finally these new DML statements are sent to corresponding new table nodes so as to be performed, thereby completing the redistribution of ticketing data in the old bullet train ticket table. The check value of this round data, an incremental result and an incremental time of this round are sent to the cluster manager. A check operation may refer to FIG. 7

The cluster manager initiates an incremental data check request of this round to the resource managers of these new table nodes, and the request carries a binlog position queried before this round increment.

After receiving the incremental data check request, the resource manager of the new node analyzes, according to the position sent by the cluster manager and table name, a binlog log to generate a SQL query statement, such that the resource manager acquires data, calculates the check value and sends the check value to the cluster manager.

The cluster manager compares the check value of the new node with the check value of the old node where the ticketing records are located. If the check values are different, this play back is failure and a new play back is required. Otherwise, the cluster manager will determine the incremental time of this round. If the incremental time is less than an incremental threshold, the cluster manager notifies the resource manager to perform a table lock operation to complete a last round incremental operation. Otherwise, a new round incremental operation starts, and the incremental operation is performed until the incremental time of a certain round is less than the incremental threshold.

### Embodiment 3

An online shopping system based on an Oracle distributed cluster database will be described in this embodiment.

In this system, assuming that shopping records are saved in tables according to regional, when the shopping records rise suddenly or shopper number is increasing or the number of good types is increasing, data amount that a certain table withstands is increased to an extent that data redistribution is needed. At this time, it is required to initiates the online redistribution operation for the distributed database, and shopping information in this region is split according to a new distribution rule.

In this embodiment, using shopping data of the Nanjing region as an example, it is assumed that all shopping records of the Nanjing region saved in one table before the redistribution. Once the shopping data of the Nanjing region has been accumulated or suddenly exploded, the table is unable to withstand so much data and data redistribution is needed. The redistribution with a modified distribution rule is expected to make shopping data of Nanjing region which was at one node be distributed to tables at multiple nodes.

In this redistribution, firstly, original data of a table of the shopping data of Nanjing region is redistributed according to a new formulated distribution rule (for example, distributed according to administrative districts, etc.). That is, data is exported from the original table of shopping records by an Oracle export command. Next, the resource manager splits all the records of a data file into multiple files according to the new distributed rule. One file corresponds to one node. The files are respectively imported into Oracle database nodes to which their new tables (the tables have been built in advance) belong under the new rule. The redistribution operation of original shopping data of Nanjing region is completed.

After completing this step, the process of online incremental data begins, in which new shopping data of Nanjing region generated during the previous redistribution is distributed to nodes of new tables. The cluster manager sends an incremental request to the resource manager of the node corresponding to the old table of the shopping data of the Nanjing region, including a position that the previous round redistribution data restores.

After receiving an online incremental request, the resource manager sequentially analyzes, according to the position sent by the cluster manager and indicating where the last round redistribution data is restored, transaction log files of Oracle, acquires data of shopping records, and calculates a check value of all columns of these data. DML statements are generated using these data. An old table name is substituted by a new table name. New distribution fields are specified after "where". New DML statements are established and separately saved in different files according to the nodes, the new distributed rule and the new distribution fields. Finally these new DML statements are sent to nodes corresponding the new tables so as to be performed, thereby completing the redistribution of shopping data in the old table of Nanjing region. The check value of this round data, an incremental result and an incremental time of this round are sent to the cluster manager. A check operation may refer to FIG. 7.

The cluster manager initiates an incremental data check request of this round to the resource managers of these new table nodes, and the request carries a transaction log position queried before this round increment.

After receiving the incremental data check request, the resource manager of the new node analyzes, according to the position sent through the request and table name, a transaction log to generate a SQL query statement. In this way, the resource manager acquires data, calculates the check value and sends the check value to the cluster manager.

The cluster manager compares the check value of the new node with the check value of the old node in which old shopping records of Nanjing region are located. If the check values are different, the play back of this time is failure and a new play back is acquired. Otherwise, the cluster manager will determine the incremental time of this round. If the incremental time is less than an incremental threshold, the cluster manager notifies the resource manager to perform a table lock operation to complete a final round incremental operation. Otherwise, a new round incremental operation starts and the incremental operation is performed until the incremental time of a certain round is less than the incremental threshold.

### Embodiment 4

An online stock trading system based on a PosgreSQ distributed cluster database will be described in this embodiment.

In this system, assuming that stock records are saved according to stock classifications, when stock trading records rise suddenly or stocks of a stock classification are increasing or the number of people holding a certain stock is increasing, data amount that a certain table withstands is increased to an extent that data redistribution is needed. At this time, the online redistribution operation of the distributed database needs to be performed and relevant stock information in this region is split according to a new distribution rule.

In this embodiment, using large-cap stock as an example, it is assumed that all large-cap stock trading records are saved in an independent table before the redistribution. Once data of large-cap stock trading records has been accumulated or suddenly exploded, the table is unable to withstand so much data and needs to be redistributed. The redistribution with the modified distribution rule is expected to make trading records data of large-cap stock which was at one node to tables at multiple nodes.

In this redistribution, firstly, original data of a table of the large-cap stock trading records is redistributed according to a new formulated distribution rule (for example, Hash partition is performed according to stock codes). That is, data is exported from the table of original large-cap stock trading records by an export command of PosgreSQL. Next, the resource manager partitions all the records of a data file into multiple files according to the new distributed rule. One file corresponds to one node. The files are respectively imported into PosgreSQL database nodes (the table has been built in advance) to which new tables belong under the new rule. The redistribution operation of original data of the large-cap stock trading records is completed.

After completing this step, the online distribution of incremental data begins. New large-cap stock trading records generated during the previous redistribution are distributed to nodes of new tables. The cluster manager sends an incremental data distribution request to the resource manager of the node corresponding to the old table of the large-cap stock trading records, including a position where data restores in the previous redistribution.

After receiving an incremental data online distribution request, the resource manager sequentially analyzes, according to the position sent by the cluster manager and indicating where the last round redistribution data is restored, transaction log files of PosgreSQLs, acquires data of trading records, and calculates a check value of all columns of these data. DML statements are generated using these data. An old table name is substituted by a new table name. New distribution fields are specified after "where". New DML statements are established and respectively saved in different files according to the nodes, the new distributed rule and the new distribution fields. Finally these new DML statements are sent to nodes corresponding the new tables to be performed, thereby completing the redistribution of data in the old table of the large-cap stock trading records. The check value of this round data, an incremental result and an incremental time of this round are sent to the cluster manager. A check operation may refer to FIG. 7.

The cluster manager initiates an incremental data check request of this round to the resource manager of these new table nodes, and the request carries a transaction log position queried before this round increment.

After receiving the incremental data check request, the resource manager of the new node analyzes, according to the position sent in the request and table name, a transaction log to generate a SQL query statement, so that the resource manager acquires data, calculates the check value and sends the check value to the cluster manager.

The cluster manager compares the check value of the new node with the check value of the old node in which old large-cap stock trading records are located. If the check values are different, the play back of this time is failure and a new play back is acquired. Otherwise, the cluster manager will determine the incremental time of this round. If the incremental time is less than an incremental threshold, the cluster manager notifies the resource manager to perform a table lock operation to complete a final round incremental operation. Otherwise, a new round incremental operation starts and the incremental operation is performed until the incremental time of a certain round is less than the incremental threshold.

From the description of the embodiments described above, it will be apparent to those skilled in the art that the method of any embodiment described above may be implemented by means of software plus a necessary general-purpose hardware platform, or may of course be implemented by hardware, but in many cases, the former is a preferred implementation mode. Based on this understanding, the solution provided by the present invention may be embodied in the form of a software product. The computer software product is stored in a storage medium (such as a ROM/RAM, a magnetic disk or an optical disk) and includes several instructions for enabling a terminal device (which may be a mobile phone, a computer, a server, a network device, or the like) to execute the method according to each embodiment of the present invention.

The embodiment of the present invention further provides a data processing device. The device is used for implementing the embodiments described above and preferred examples. What has been described will not be repeated. As used below, the term "module" may be software, hardware or a combination thereof capable of implementing predetermined functions. The device described below in the embodiment may be implemented by software, but implementation by hardware or by a combination of software and hardware is also possible and conceived.

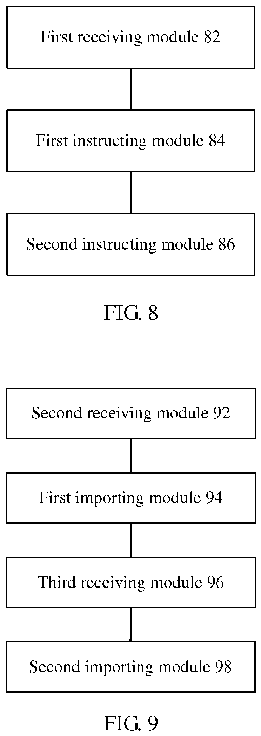

FIG. 8 is a block diagram of a data processing device according to an embodiment of the present invention. As shown in FIG. 8, the device includes a first receiving module 82, a first instructing module 84 and a second instructing module 86. The device is described below.

The first receiving module 82 is configured to receive a data redistribution request. The first instructing module 84, connected to the first receiving module 82, is configured to instruct, according to the data redistribution request, a first resource manager to split original data stored in a first node and import each split sub-original-data into a second node corresponding to the each sub-original-data. The first resource manager is configured to manage data stored in the first node. The second instructing module 86, connected to the first instructing module 84, is configured to instruct the first resource manager to import incremental data which is stored in the first node during splitting and importing processes into a second node corresponding to the incremental data.

In one embodiment, the second instructing module 86 includes an acquiring unit and a sending unit. The acquiring unit is configured to acquire a logical transaction log of the second node corresponding to the incremental data after sub-original-data is imported. The logical transaction log is used for describing information of the sub-original-data stored in the second node. The sending unit is configured to send, according to the logical transaction log, an incremental instruction to the first resource manager. The incremental instruction is used for instructing the first resource manager to determine, according to the logical transaction log, the incremental data which is stored in the first node during the splitting and importing processes, and import the incremental data into the second node corresponding to the incremental data.

In one embodiment, the device further includes a first processing module, which is configured to perform the steps described below. After the first resource manager is instructed to import the incremental data which is stored in the first node during the splitting and importing processes into the second node corresponding to the incremental data, the first processing module receives a first check value, an import time and an import result of the incremental data sent from the first resource manager, and receives a second check value of the incremental data sent from the second resource manager. The second resource manager is configured to manage data stored in the second node. When the import result is determined to be successful, whether the first check value and the second check value are the same is determined. When the first check value and the second check value are determined to be different, the first processing module repeats the process of instructing the first resource manager to import the incremental data into the second node corresponding to the incremental data. And/or, when the first check value and the second check value are determined to be the same, whether the import time is less than a predetermined threshold is determined. When the import time is less than the predetermined threshold, the first processing module controls the first node to stop storing new data and instructs the first resource manager to import data stored in the first node and not imported into the second node into a corresponding second node. And/or, when the import time is greater than or equal to the predetermined threshold, the first processing module returns the step of instructing the first resource manager to import the data stored in the first node and not imported into the corresponding second node into the corresponding second node and performs the step until a time of importing the data not imported into the corresponding second node into the corresponding second node is less than the predetermined threshold.

FIG. 9 is a block diagram of another data processing device according to an embodiment of the present invention. As shown in FIG. 9, the device includes a second receiving module 92, a first importing module 94, a third receiving module 96 and a second importing module 98. The device is described below.

The second receiving module 92 is configured to receive a data redistribution instruction from a cluster manager. The first importing module 94 is connected to the second receiving module 92 and is configured to split, according to the data redistribution instruction, original data stored in a first node and import each split sub-original-data into a second node corresponding to the each sub-original-data. The third receiving module 96 is connected to the first importing module 94 and is configured to receive an incremental instruction from the cluster manager. The second importing module 98 is connected to the third receiving module 96 and is configured to import, according to the incremental instruction, incremental data which is stored in the first node during splitting and importing processes into a second node corresponding to the incremental data.

In one embodiment, the first importing module 94 splits according to the data redistribution instruction, original data stored in the first node and import each split sub-original-data into the second node corresponding to the sub-original-data in the following manners. The original data is exported from the first node according to the data redistribution instruction. The original data is split according to a data distribution rule. The original data is split into multiple files. One file corresponds to one second node. The multiple files are uploaded to second nodes corresponding to the multiple files respectively such that data importing is performed.

In one embodiment, the second importing module 98 imports, according to the incremental instruction, the incremental data which is stored in the first node during the splitting and importing processes into the second node corresponding to the incremental data in the following manners. According to a logical transaction log carried by the incremental instruction, the incremental data is determined by the second importing module. The logical transaction log is used for describing information of sub-original-data stored in the second node. According the incremental data, a data manipulation language (DML) statement is generated. The incremental data is imported into the second node corresponding to the incremental data by using the DML statement_{∘}

In one embodiment, the device further includes a second processing module. After the incremental data which is stored in the first node during the splitting and importing processes is imported into the second node corresponding to the incremental data according to the incremental indication, the second processing module is configured to determine a first check value of the incremental data, an import time and an import result of importing the incremental data into the second node; and send the first check value, the import time and the import result to the cluster manager.

In one embodiment, the device further includes a third processing module, which is configured to perform the steps described below. After the first check value, the import time and the import result are sent to the cluster manager, the third processing module receives an incremental reimporting instruction from the cluster manager. According to the incremental reimporting instruction, and repeats the process of importing the incremental data into the second node corresponding to the incremental data. And/or, the third processing module receives a stop instruction from the cluster manager, stops the first node storing new data according to the stop instruction, and imports data stored in the first node and not imported into a corresponding second node into the corresponding second node. And/or, the third processing module receives a repetition importing instruction from the cluster manager. According to the repetition importing instruction, the third processing module returns the step of importing the data stored in the first node and not imported into the corresponding second node into the corresponding second node and performs the step until a time of importing the data not imported into the corresponding second node into the corresponding second node is less than a predetermined threshold.

In one embodiment, a data processing system is further provided, which includes a cluster manager and a first resource manager. The cluster manager is connected to the first resource manager, and is configured to send, according to a received data redistribution request, a data redistribution instruction and an incremental instruction to the first resource manager. The first resource manager is configured to split, according to the data redistribution instruction from the cluster manager, original data stored in a first node and import each split sub-original-data into a second node corresponding to the each sub-original-data, and import, according to the incremental instruction from the cluster manager, incremental data which is stored in the first node during splitting and importing processes into a second node corresponding to the incremental data.

In one embodiment, the cluster manager sends the incremental instruction to the first resource manager in the following manner. A logical transaction log of the second node corresponding to the incremental data after sub-original-data is imported is acquired by the cluster manager. The logical transaction log is used for describing information of the sub-original-data stored in the second node. The cluster manager sends the incremental instruction to the first resource manager according to the logical transaction log.

In one embodiment, the data processing system further includes a second resource manager. The second resource manager is connected to the cluster manager (the cluster manager is further configured to manage the second resource manager). In this embodiment, after sending the incremental instruction to the first manager, the cluster manager is further configured to perform the steps described below. The cluster manager receives a first check value, an import time and an import result of the incremental data from the first resource manager, and receives a second check value of the incremental data from the second resource manager. When the import result is determined to be successful, whether the first check value and the second check value are the same is determined. The cluster manager sends an incremental reimporting instruction to the first resource manager. And/or, when the first check value and the second check value are determined to be the same, whether the import time is less than a predetermined threshold is determined. When the import time is less than the predetermined threshold, the cluster manager sends a stop instruction to the first resource manager. And/or, when the import time is greater than or equal to the predetermined threshold, the cluster manager sends a repetition importing instruction to the first resource manager. In this embodiment, after importing the incremental data which is stored in the first node during the splitting and importing processes into the second node corresponding to the incremental data according to the incremental instruction from the cluster manager, the first resource manager is further configured to perform the steps described below. The first resource manager determines the first check value of the incremental data, and the import time and the import result of importing the incremental data into the second node, sends the first check value, the import time and the import result to the cluster manager, receives the incremental reimporting instruction from the cluster manager, and repeats the process of importing the incremental data into the second node corresponding to the incremental data according to the incremental reimporting instruction. And/or, the first resource manager receives the stop instruction from the cluster manager, stops the first node storing new data according to the stop instruction, and imports data stored in the first node and not imported into a corresponding second node into the corresponding second node. And/or, the first resource manager receives the repetition importing instruction from the cluster manager, returns to the step of importing the data stored in the first node and not imported into the corresponding second node into the corresponding second node according to the repetition importing instruction, and performs the step until a time of importing the data not imported into the corresponding second node into the corresponding second node is less than a predetermined threshold.

In one embodiment, the step in which the first resource manager splits, according to the data redistribution instruction from the cluster manager, the original data stored in the first node and imports each split sub-original-data into the second node corresponding to the each sub-original-data is implemented in the following manner. The original data is exported from the first node according to the data redistribution instruction. The original data is split according to a data distribution rule. The original data is split into multiple files. One file corresponds to one second node. The multiple files are uploaded to second nodes corresponding to the multiple files separately to perform data importing.

In one embodiment, the step in which the first resource manager imports the incremental data to the second node corresponding to the incremental data according to the incremental instruction may be implemented in the following manner. The first resource manager determines the incremental data according to the logical transaction log carried by the incremental instruction. The logical transaction log is used for describing information of the sub-original-data stored in the second node. The first resource manager generates a data manipulation language (DML) statement according the incremental data, and imports the incremental data, into the second node corresponding to the incremental data by using the DML statement.

An embodiment of the present invention further provides a storage medium. In this embodiment, the storage medium may be configured to store program codes for executing the steps in the embodiments described above.

In this embodiment, the storage medium may include, but is not limited to, a U disk, a readonly memory (ROM), a random access memory (RAM), a mobile hard disk, a magnetic disk, an optical disk or other medium capable of storing program codes.

In this embodiment, a processor executes the above steps according to the program codes stored in the storage medium.

For examples in this embodiment, reference may be made to the examples described in the above embodiments and implementation modes, and the examples will not be repeated in this embodiment.

Compared with the online incremental data redistribution solution of the distributed database in the related art, the embodiments of the present invention have the beneficial effects described below.

The adaptability is more extensive. Architectural design of data sharding in advance is no longer needed. A key solution is provided to performing a feasible online redistribution on the distributed database that doesn't support redistribution or doesn't have a redistribution plan. Thus this solution has more extensive adaptability for the distributed databases.

The reliability and maintainability of the distributed database are ensured. The incremental data mode adopted in this solution is not limited by the increment of each sharding (base), so that the data distribution rule initially defined will not become a limitation, and the distributed database will have a stronger maintainability in a later period.

Data security and accuracy are ensured. The new data incremental check method ensures the accuracy of each increment, thereby ensuring the data security and efficiency of the redistribution.

In an example not covered by the scope of the appended claims, the above-mentioned modules or steps may be implemented by a universal computing device. The modules or steps may be concentrated on a single computing device or distributed on a network formed by multiple computing devices. The modules or steps may be implemented by program codes executable by the computing devices, so that they may be stored in a storage device and executed by the computing devices, and in some circumstances, the illustrated or described steps may be performed in sequences different from those described herein, or they may be made into integrated circuit modules separately, or multiple modules or steps therein may be implemented into a single integrated circuit module.

### INDUSTRIAL APPLICABILITY

The online data distribution adopted in the embodiments of the present invention avoids service interruption. Additionally, in the redistribution of the incremental data, redistribution is only performed on the incremental data rather than on the entire database in which the incremental data is located, thereby ensuring the implementation of the data redistribution when the database has huge data. Therefore, when the database has the huge data, the implementation of the data redistribution is achieved without interrupting service.

## Claims

1. A data processing method, applied to a distributed database comprising a cluster manager and at least one resource manager, wherein the method is performed by the cluster manager and comprises:
receiving (S202) a data redistribution request;
instructing (S204), according to the data redistribution request, a first resource manager to split original data stored in a first node and import each split sub-original-data into a corresponding second node, wherein the first resource manager is configured to manage data stored in the first node;
instructing (S206) the first resource manager to import incremental data, which is stored in the first node during splitting and importing processes, into a corresponding second node; wherein the import incremental data is determined by the first resource manager after each split sub-original-data is imported into the corresponding second node; and
receiving a first check value, import time and an import result of the incremental data which are sent from the first resource manager, and receiving a second check value of the incremental data which is sent from a second resource manager, wherein the second resource manager is configured to manage data stored in the second node;
in response to determining that the import result is successful, determining whether the first check value and the second check value are the same; and
performing the following processes:
in response to determining that the first check value and the second check value are different, re-instructing the first resource manager to import the incremental data into the corresponding second node;
in response to determining that the first check value and the second check value are the same, determining whether the import time is less than a predetermined threshold;
in response to determining that the import time is less than the predetermined threshold, controlling the first node not to store new data and instructing the first resource manager to import data which is stored in the first node and not imported into the second node into the corresponding second node; and
in response to determining that the import time is greater than or equal to the predetermined threshold, returning to the step of instructing the first resource manager to import the data which is stored in the first node and not imported into the corresponding second node into the corresponding second node, and repeatedly performing the step until time needed to import the data which is not imported into the corresponding second node into the corresponding second node is less than the predetermined threshold;
wherein the first check value of the incremental data is calculated by the first resource manager through: acquiring a database transaction log of the first node according to a position backed up last time or played back last time, obtaining Structured Query Language, SQL, statements by filtering the database transaction log, and acquiring the incremental data by using the SQL statements to calculate the first check value, and
the second check value of the incremental data is calculated by the second resource manager through: generating SQL query statements for querying data in the second node according to an incremental data check request, acquiring the incremental data by using the generated SQL statements to calculate the second check value;
wherein the import time of the incremental data is time used for importing the incremental data stored in the first node into the corresponding second node;
wherein the import result is used for indicating whether importing the incremental data stored in the first node into the corresponding second node is successful;
wherein the first check value and the second check value of the incremental data are used by the cluster manager to verify the data integrity of the incremental data imported from the first resource manager into the second node.

2. The method according to claim 1, wherein the instructing the first resource manager to import the incremental data, which is stored in the first node during the splitting and importing processes into the corresponding second node comprises:
acquiring a logical transaction log of the second node corresponding to the incremental data after the sub-original-data is imported into the second node, wherein the logical transaction log is used for describing information of the sub-original-data stored in the second node; and
sending, according to the logical transaction log, an incremental instruction to the first resource manager, wherein the incremental instruction is used for instructing the first resource manager to determine, according to the logical transaction log, the incremental data which is stored in the first node during the splitting and importing processes, and import the incremental data into the corresponding second node.

3. A data processing method, applied to a distributed database comprising a cluster manager and at least one resource manager, wherein the method is performed by the resource manager and comprises:
receiving (S302) a data redistribution instruction sent from a cluster manager;
splitting (S304), according to the data redistribution instruction, original data stored in a first node and importing each split sub-original-data into a corresponding second node;
receiving (S306) an incremental instruction sent from the cluster manager;
importing (S308), according to the incremental instruction, incremental data which is stored in the first node during splitting and importing processes into a corresponding second node;
determining a first check value of the incremental data, import time of the incremental data, and an import result of importing the incremental data into the second node;
sending the first check value, the import time and the import result to the cluster manager;
after sending the first check value, the import time and the import result to the cluster manager, further comprising:
receiving an incremental reimporting instruction from the cluster manager, and repeating, according to the incremental reimporting instruction, a process of importing the incremental data into the corresponding second node;
receiving a stop instruction from the cluster manager, stopping the first node storing new data according to the stop instruction, and importing data which is stored in the first node and has not been imported into a corresponding second node into the corresponding second node; and
receiving a repetition importing instruction from the cluster manager; and returning, according to the repetition importing instruction , to the step of importing the data which is stored in the first node and has not been imported into the corresponding second node into the corresponding second node, and repeatedly performing the step until time needed to import the data which has not been imported into the corresponding second node into the corresponding second node is less than a predetermined threshold;
wherein the first check value of the incremental data is calculated by the first resource manager through: acquiring a database transaction log of the first node according to a position backed up last time or played back last time, obtaining Structured Query Language, SQL, statements by filtering the database transaction log, and acquiring the incremental data by using the SQL statements to calculate the first check value;
wherein the import time of the incremental data is time used for importing the incremental data stored in the first node into the corresponding second node;
wherein the import result is used for indicating whether importing the incremental data stored in the first node into the corresponding second node is successful;
wherein the first check value of the incremental data is used by the cluster manager to verify the data integrity of the incremental data imported from the first resource manager into the second node.

4. The method according to claim 3, wherein the splitting, according to the data redistribution instruction, the original data stored in the first node and importing each split sub-original-data into the corresponding second node comprises:
exporting, according to the data redistribution instruction, the original data from the first node;
splitting, according to a data distribution rule, the original data into a plurality of files, wherein each of the plurality of files corresponds to a respective one of second nodes; and
uploading the plurality of files to the second nodes corresponding to the plurality of files separately to perform importing.

5. The method according to claim 3, wherein the importing, according to the incremental instruction, the incremental data which is stored in the first node during the splitting and importing processes into the corresponding second node comprises:
determining the incremental data according to a logical transaction log carried by the incremental instruction, wherein the logical transaction log is used for describing information of the sub-original-data stored in the second node;
generating a data manipulation language, DML, statement according the incremental data; and
importing the incremental data into the corresponding second node by using the DML statement.

6. A cluster manager in a distributed database, comprising:
a first receiving module (82), which is configured to receive a data redistribution request;
a first instructing module (84), which is configured to instruct, according to the data redistribution request, a first resource manager in the distributed database to split original data stored in a first node and import each split sub-original-data into a corresponding second node, wherein the first resource manager is configured to manage data stored in the first node;
a second instructing module (86), which is configured to instruct the first resource manager to import incremental data which is stored in the first node during splitting and importing processes into a corresponding second node; wherein the import incremental data is determined by the first resource manager after each split sub-original-data is imported into the corresponding second node; and
a first processing module, which is configured to:
receive, after instructing the first resource manager to import the incremental data which is stored in the first node during the splitting and importing processes into the second node corresponding to the incremental data, a first check value, import time and an import result of the incremental data from the first resource manager, and receive a second check value of the incremental data from a second resource manager in the distributed database, wherein the second resource manager is configured to manage data stored in the second node;
in response to determining that the import result is successful, determine whether the first check value and the second check value are the same; and
perform the following processes:
in response to determining that the first check value and the second check value are different, re-instructing the first resource manager to import the incremental data into the corresponding second node;
in response to determining that the first check value and the second check value are the same, determining whether the import time is less than a predetermined threshold;
in response to determining that the import time is less than the predetermined threshold, controlling the first node not to store new data and instructing the first resource manager to import data which is stored in the first node and not imported into the second node into the corresponding second node; and
in response to determining that the import time is greater than or equal to the predetermined threshold, returning to the step of instructing the first resource manager to import the data which is stored in the first node and not imported into the corresponding second node into the corresponding second node, and repeatedly performing the step until time needed to import the data which is not imported into the corresponding second node into the corresponding second node is less than the predetermined threshold;
wherein the first check value of the incremental data is calculated by the first resource manager through: acquiring a database transaction log of the first node according to a position backed up last time or played back last time, obtaining Structured Query Language, SQL, statements by filtering the database transaction log, and acquiring the incremental data by using the SQL statements to calculate the first check value, and
the second check value of the incremental data is calculated by the second resource manager through: generating SQL statements for querying data in the second node according to an incremental data check request, acquiring the incremental data by using the generated SQL statements to calculate the second check value;
wherein the import time of the incremental data is time used for importing the incremental data stored in the first node into the corresponding second node;
wherein the import result is used for indicating whether importing the incremental data stored in the first node into the corresponding second node is successful;
wherein the first check value and the second check value of the incremental data are used by the cluster manager to verify the data integrity of the incremental data imported from the first resource manager into the second node.

7. The cluster manager according to claim 6, wherein the second instructing module comprises:
an acquiring unit, which is configured to acquire a logical transaction log of the second node corresponding to the incremental data after the sub-original-data is imported into the second node, wherein the logical transaction log is used for describing information of the sub-original-data stored in the second node; and
a sending unit, which is configured to send, according to the logical transaction log, an incremental instruction to the first resource manager, wherein the incremental instruction is used for instructing the first resource manager, according to the logical transaction log, to determine the incremental data which is stored in the first node during the splitting and importing processes, and importing the incremental data into the second node corresponding to the incremental data.

8. A resource manager in a distributed database, comprising:
a second receiving module (92), which is configured to receive a data redistribution instruction from a cluster manager in the distributed database;
a first importing module (94), which is configured to split, according to the data redistribution instruction, original data stored in a first node and import each split sub-original-data into a corresponding second node;
a third receiving module (96), which is configured to receive an incremental instruction from the cluster manager;
a second importing module (98), which is configured to import, according to the incremental instruction, incremental data which is stored in the first node during splitting and importing processes into a corresponding second node; and
a second processing module, which is configured to determine, after importing the incremental data which is stored in the first node during the splitting and importing processes into the second node corresponding to the incremental data according to the incremental instruction, a first check value of the incremental data, import time of the incremental data, and an import result of importing the incremental data into the second node; and send the first check value, the import time and the import result to the cluster manager;
a third processing module, which is configured to:
receive an incremental reimporting instruction from the cluster manager after sending the first check value, the import time and the import result to the cluster manager, and repeating, according to the incremental reimporting instruction, the process of importing the incremental data into the second node corresponding to the incremental data;
receive a stop instruction from the cluster manager, stop the first node storing new data according to the stop instruction, and import data which is stored in the first node and not imported into a corresponding second node into the corresponding second node; and
receive a repetition importing instruction from the cluster manager; and return, according to the repetition importing instruction, to the step of importing the data which is stored in the first node and not imported into the corresponding second node into the corresponding second node, and performing the step until time needed to import the data which is not imported into the corresponding second node into the corresponding second node is less than a predetermined threshold;
wherein the first check value of the incremental data is calculated through: acquiring a database transaction log of the first node according to a position backed up last time or played back last time, obtaining Structured Query Language, SQL, statements by filtering the database transaction log, and acquiring the incremental data by using the SQL statements to calculate the first check value;
wherein the import time of the incremental data is time used for importing the incremental data stored in the first node into the corresponding second node;
wherein the import result is used for indicating whether importing the incremental data stored in the first node into the corresponding second node is successful;
wherein the first check value of the incremental data is used by the cluster manager to verify the data integrity of the incremental data imported from the first resource manager into the second node.

9. A data processing system, comprising a cluster manager as claimed in any one of claims 6-7 and a first resource manager as claimed in claim 8, wherein the cluster manager is connected to the first resource manager.

## Patentansprüche

1. Datenverarbeitungsverfahren, das auf eine verteilte Datenbank angewendet wird, die einen Clustermanager und mindestens einen Ressourcenmanager umfasst, wobei das Verfahren durch den Clustermanager durchgeführt wird und Folgendes umfasst:
Empfangen (S202) einer Datenumverteilungsanforderung;
Anweisen (S204) eines ersten Ressourcenmanagers gemäß der Datenumverteilungsanforderung, in einem ersten Knoten gespeicherte Originaldaten aufzuteilen und alle aufgeteilten Teil-Originaldaten in einen entsprechenden zweiten Knoten zu importieren, wobei der erste Ressourcenmanager dazu konfiguriert ist, in dem ersten Knoten gespeicherte Daten zu verwalten;
Anweisen (S206) des ersten Ressourcenmanagers, inkrementelle Daten, die während des Aufteilungs- und Importprozesses in dem ersten Knoten gespeichert sind, in einen entsprechenden zweiten Knoten zu importieren; wobei die inkrementellen Importdaten durch den ersten Ressourcenmanager bestimmt werden, nachdem alle aufgeteilten Teil-Originaldaten in den entsprechenden zweiten Knoten importiert wurden; und
Empfangen eines ersten Prüfwerts, einer Importzeit und eines Importergebnisses der inkrementellen Daten, die von dem ersten Ressourcenmanager gesendet werden, und Empfangen eines zweiten Prüfwerts der inkrementellen Daten, der von einem zweiten Ressourcenmanager gesendet wird, wobei der zweite Ressourcenmanager dazu konfiguriert ist, in dem zweiten Knoten gespeicherte Daten zu verwalten;
als Reaktion auf Bestimmen, dass das Importergebnis erfolgreich ist, Bestimmen, ob der erste Prüfwert und der zweite Prüfwert gleich sind; und
Durchführen der folgenden Prozesse:
als Reaktion auf das Bestimmen, dass der erste Prüfwert und der zweite Prüfwert unterschiedlich sind, erneutes Anweisen des ersten Ressourcenmanagers, die inkrementellen Daten in den entsprechenden zweiten Knoten zu importieren;
als Reaktion auf das Bestimmen, dass der erste Prüfwert und der zweite Prüfwert gleich sind, Bestimmen, ob die Importzeit geringer als ein vorbestimmter Schwellenwert ist;
als Reaktion auf Bestimmen, dass die Importzeit geringer als der vorbestimmte Schwellenwert ist, Steuern des ersten Knotens, damit er keine neuen Daten speichert, und Anweisen des ersten Ressourcenmanagers, Daten, die in dem ersten Knoten gespeichert sind und nicht in den zweiten Knoten importiert wurden, in den entsprechenden zweiten Knoten zu importieren; und
als Reaktion auf Bestimmen, dass die Importzeit größer oder gleich dem vorbestimmten Schwellenwert ist, Zurückkehren zu dem Schritt des Anweisens des ersten Ressourcenmanagers, die Daten, die in dem ersten Knoten gespeichert sind und nicht in den entsprechenden zweiten Knoten importiert wurden, in den entsprechenden zweiten Knoten zu importieren, und wiederholtes Durchführen des Schritts, bis die zum Importieren der Daten, die nicht in den entsprechenden zweiten Knoten importiert wurden, in den entsprechenden zweiten Knoten benötigte Zeit geringer als der vorbestimmte Schwellenwert ist;
wobei der erste Prüfwert der inkrementellen Daten durch den ersten Ressourcenmanager durch Folgendes berechnet wird:
Erfassen eines Datenbanktransaktionsprotokolls des ersten Knotens gemäß einer beim letzten Mal gesicherten oder beim letzten Mal wiedergegebenen Position, Erhalten von Angaben in strukturierter Abfragesprache (Structured Query Language - SQL) durch Filtern des Datenbanktransaktionsprotokolls und Erfassen der inkrementellen Daten durch Verwenden der SQL-Angaben, um den ersten Prüfwert zu berechnen, und
der zweite Prüfwert der inkrementellen Daten durch den zweiten Ressourcenmanager durch Folgendes berechnet wird: Generieren von SQL-Abfrageangaben zum Abfragen von Daten in dem zweiten Knoten gemäß einer Prüfanforderung für inkrementelle Daten, Erfassen der inkrementellen Daten durch Verwenden der generierten SQL-Angaben, um den zweiten Prüfwert zu berechnen;
wobei die Importzeit der inkrementellen Daten die Zeit ist, die zum Importieren der in dem ersten Knoten gespeicherten inkrementellen Daten in den entsprechenden zweiten Knoten aufgebracht wird;
wobei das Importergebnis verwendet wird, um anzugeben, ob das Importieren der in dem ersten Knoten gespeicherten inkrementellen Daten in den entsprechenden zweiten Knoten erfolgreich ist;
wobei der erste Prüfwert und der zweite Prüfwert der inkrementellen Daten durch den Clustermanager verwendet werden, um die Datenintegrität der von dem ersten Ressourcenmanager in den zweiten Knoten importierten inkrementellen Daten zu verifizieren.

2. Verfahren nach Anspruch 1, wobei das Anweisen des ersten Ressourcenmanagers, die inkrementellen Daten, die während des Aufteilungs- und Importprozesses in dem ersten Knoten gespeichert sind, in den entsprechenden zweiten Knoten zu importieren, Folgendes umfasst:
Erfassen eines logischen Transaktionsprotokolls des zweiten Knotens entsprechend den inkrementellen Daten, nachdem die Teil-Originaldaten in den zweiten Knoten importiert wurden, wobei das logische Transaktionsprotokoll zum Beschreiben von Informationen der im zweiten Knoten gespeicherten Teil-Originaldaten verwendet wird; und
Senden einer inkrementellen Anweisung gemäß dem logischen Transaktionsprotokoll an den ersten Ressourcenmanager, wobei die inkrementelle Anweisung zum Anweisen des ersten Ressourcenmanagers verwendet wird, die inkrementellen Daten gemäß dem logischen Transaktionsprotokoll zu bestimmen, die während des Aufteilungs- und Importprozesses in dem ersten Knoten gespeichert sind, und die inkrementellen Daten in den entsprechenden zweiten Knoten zu importieren.

3. Datenverarbeitungsverfahren, das auf eine verteilte Datenbank angewendet wird, die einen Clustermanager und mindestens einen Ressourcenmanager umfasst, wobei das Verfahren durch den Ressourcenmanager durchgeführt wird und Folgendes umfasst:
Empfangen (S302) einer von einem Clustermanager gesendeten Datenumverteilungsanweisung;
Aufteilen (S304) von Originaldaten, die in einem ersten Knoten gespeichert sind, gemäß der Datenumverteilungsanweisung und Importieren aller aufgeteilten Teil-Originaldaten in einen entsprechenden zweiten Knoten;
Empfangen (S306) einer von dem Clustermanager gesendeten inkrementellen Anweisung;
Importieren (S308) von inkrementellen Daten, die während des Aufteilungs- und Importprozesses in dem ersten Knoten gespeichert sind, in einen entsprechenden zweiten Knoten gemäß der inkrementellen Anweisung;
Bestimmen eines ersten Prüfwerts der inkrementellen Daten, einer Importzeit der inkrementellen Daten und eines Importergebnisses des Importierens der inkrementellen Daten in den zweiten Knoten;
Senden des ersten Prüfwerts, der Importzeit und des Importergebnisses an den Clustermanager;
ferner umfassend, nach dem Senden des ersten Prüfwerts, der Importzeit und des Importergebnisses an den Clustermanager:
Empfangen einer Anweisung zum inkrementellen Neuimportieren von dem Clustermanager und Wiederholen eines Prozesses zum Importieren der inkrementellen Daten in den entsprechenden zweiten Knoten gemäß der Anweisung zum inkrementellen Neuimportieren;
Empfangen einer Stoppanweisung von dem Clustermanager, Stoppen des ersten Knotens, der neue Daten speichert, gemäß der Stoppanweisung und Importieren von Daten, die in dem ersten Knoten gespeichert sind und nicht in einen entsprechenden zweiten Knoten importiert wurden, in den entsprechenden zweiten Knoten; und
Empfangen einer Anweisung zur Wiederholung des Importierens von dem Clustermanager; und Zurückkehren zu dem Schritt des Importierens der Daten, die in dem ersten Knoten gespeichert sind und nicht in den entsprechenden zweiten Knoten importiert wurden, in den entsprechenden zweiten Knoten gemäß der Anweisung zur Wiederholung des Importierens und wiederholtes Durchführen des Schritts, bis die zum Importieren der Daten, die nicht in den entsprechenden zweiten Knoten importiert wurden, in den entsprechenden zweiten Knoten benötigte Zeit geringer als ein vorbestimmter Schwellenwert ist;
wobei der erste Prüfwert der inkrementellen Daten durch den ersten Ressourcenmanager durch Folgendes berechnet wird:
Erfassen eines Datenbanktransaktionsprotokolls des ersten Knotens gemäß einer beim letzten Mal gesicherten oder beim letzten Mal wiedergegebenen Position, Erhalten von Angaben in strukturierter Abfragesprache (SQL) durch Filtern des Datenbanktransaktionsprotokolls und Erfassen der inkrementellen Daten durch Verwenden der SQL-Angaben, um den ersten Prüfwert zu berechnen;
wobei die Importzeit der inkrementellen Daten die Zeit ist, die zum Importieren der in dem ersten Knoten gespeicherten inkrementellen Daten in den entsprechenden zweiten Knoten aufgebracht wird;
wobei das Importergebnis verwendet wird, um anzugeben, ob das Importieren der in dem ersten Knoten gespeicherten inkrementellen Daten in den entsprechenden zweiten Knoten erfolgreich ist;
wobei der erste Prüfwert der inkrementellen Daten durch den Clustermanager verwendet wird, um die Datenintegrität der von dem ersten Ressourcenmanager in den zweiten Knoten importierten inkrementellen Daten zu verifizieren.

4. Verfahren nach Anspruch 3, wobei das Aufteilen der in dem ersten Knoten gespeicherten Originaldaten gemäß der Datenumverteilungsanweisung und das Importieren aller aufgeteilten Teil-Originaldaten in den entsprechenden zweiten Knoten Folgendes umfassen:
Exportieren der Originaldaten von dem ersten Knoten gemäß der Datenumverteilungsanweisung;
Aufteilen der Originaldaten in eine Vielzahl von Dateien gemäß einer Datenverteilungsregel, wobei jede der Vielzahl von Dateien einem jeweiligen der zweiten Knoten entspricht; und
separates Hochladen der Vielzahl von Dateien in die zweiten Knoten, die der Vielzahl von Dateien entspricht, um das Importieren durchzuführen.

5. Verfahren nach Anspruch 3, wobei das Importieren der inkrementellen Daten, die während des Aufteilungs- und Importprozesses in dem ersten Knoten gespeichert sind, in den entsprechenden zweiten Knoten gemäß der inkrementellen Anweisung Folgendes umfasst:
Bestimmen der inkrementellen Daten gemäß einem logischen Transaktionsprotokoll, das durch die inkrementelle Anweisung übertragen wird, wobei das logische Transaktionsprotokoll zum Beschreiben von Informationen der in dem zweiten Knoten gespeicherten Teil-Originaldaten verwendet wird;
Generieren einer Angabe in Datenmanipulationssprache (data manipulation language - DML) gemäß den inkrementellen Daten; und
Importieren der inkrementellen Daten in den entsprechenden zweiten Knoten durch Verwenden der DML-Angabe.

6. Clustermanager in einer verteilten Datenbank, umfassend:
ein erstes Empfangsmodul (82), das dazu konfiguriert ist, eine Datenumverteilungsanforderung zu empfangen;
ein erstes Anweisungsmodul (84), das dazu konfiguriert ist, einen ersten Ressourcenmanager in der verteilten Datenbank gemäß der Datenumverteilungsanforderung anzuweisen, in einem ersten Knoten gespeicherte Originaldaten aufzuteilen und alle aufgeteilten Teil-Originaldaten in einen entsprechenden zweiten Knoten zu importieren, wobei der erste Ressourcenmanager dazu konfiguriert ist, in dem ersten Knoten gespeicherte Daten zu verwalten;
ein zweites Anweisungsmodul (86), das dazu konfiguriert ist, den ersten Ressourcenmanager anzuweisen, inkrementelle Daten, die während des Aufteilungs- und Importprozesses in dem ersten Knoten gespeichert sind, in einen entsprechenden zweiten Knoten zu importieren; wobei die inkrementellen Importdaten durch den ersten Ressourcenmanager bestimmt werden, nachdem alle aufgeteilten Teil-Originaldaten in den entsprechenden zweiten Knoten importiert wurden; und
ein erstes Verarbeitungsmodul, das zu Folgendem konfiguriert ist:
nach dem Anweisen des ersten Ressourcenmanagers, die inkrementellen Daten, die während des Aufteilungs- und Importprozesses in dem ersten Knoten gespeichert sind, in den zweiten Knoten entsprechend den inkrementellen Daten zu importierten, Empfangen eines ersten Prüfwerts, einer Importzeit und eines Importergebnisses der inkrementellen Daten von dem ersten Ressourcenmanager und Empfangen eines zweiten Prüfwerts der inkrementellen Daten von einem zweiten Ressourcenmanager in der verteilten Datenbank, wobei der zweite Ressourcenmanager dazu konfiguriert ist, in dem zweiten Knoten gespeicherte Daten zu verwalten;
als Reaktion auf Bestimmen, dass das Importergebnis erfolgreich ist, Bestimmen, ob der erste Prüfwert und der zweite Prüfwert gleich sind; und
Durchführen der folgenden Prozesse:
als Reaktion auf das Bestimmen, dass der erste Prüfwert und der zweite Prüfwert unterschiedlich sind, erneutes Anweisen des ersten Ressourcenmanagers, die inkrementellen Daten in den entsprechenden zweiten Knoten zu importieren;
als Reaktion auf das Bestimmen, dass der erste Prüfwert und der zweite Prüfwert gleich sind, Bestimmen, ob die Importzeit geringer als ein vorbestimmter Schwellenwert ist;
als Reaktion auf Bestimmen, dass die Importzeit geringer als der vorbestimmte Schwellenwert ist, Steuern des ersten Knotens, damit er keine neuen Daten speichert, und Anweisen des ersten Ressourcenmanagers, Daten, die in dem ersten Knoten gespeichert sind und nicht in den zweiten Knoten importiert wurden, in den entsprechenden zweiten Knoten zu importieren; und
als Reaktion auf Bestimmen, dass die Importzeit größer oder gleich dem vorbestimmten Schwellenwert ist, Zurückkehren zu dem Schritt des Anweisens des ersten Ressourcenmanagers, die Daten, die in dem ersten Knoten gespeichert sind und nicht in den entsprechenden zweiten Knoten importiert wurden, in den entsprechenden zweiten Knoten zu importieren, und wiederholtes Durchführen des Schritts, bis die zum Importieren der Daten, die nicht in den entsprechenden zweiten Knoten importiert wurden, in den entsprechenden zweiten Knoten benötigte Zeit geringer als der vorbestimmte Schwellenwert ist;
wobei der erste Prüfwert der inkrementellen Daten durch den ersten Ressourcenmanager durch Folgendes berechnet wird:
Erfassen eines Datenbanktransaktionsprotokolls des ersten Knotens gemäß einer beim letzten Mal gesicherten oder beim letzten Mal wiedergegebenen Position, Erhalten von Angaben in strukturierter Abfragesprache (SQL) durch Filtern des Datenbanktransaktionsprotokolls und Erfassen der inkrementellen Daten durch Verwenden der SQL-Angaben, um den ersten Prüfwert zu berechnen, und
der zweite Prüfwert der inkrementellen Daten durch den zweiten Ressourcenmanager durch Folgendes berechnet wird: Generieren von SQL-Angaben zum Abfragen von Daten im zweiten Knoten gemäß einer Prüfanforderung für inkrementelle Daten, Erfassen der inkrementellen Daten durch Verwenden der generierten SQL-Angaben, um den zweiten Prüfwert zu berechnen;
wobei die Importzeit der inkrementellen Daten die Zeit ist, die zum Importieren der in dem ersten Knoten gespeicherten inkrementellen Daten in den entsprechenden zweiten Knoten aufgebracht wird;
wobei das Importergebnis verwendet wird, um anzugeben, ob das Importieren der in dem ersten Knoten gespeicherten inkrementellen Daten in den entsprechenden zweiten Knoten erfolgreich ist;
wobei der erste Prüfwert und der zweite Prüfwert der inkrementellen Daten durch den Clustermanager verwendet werden, um die Datenintegrität der von dem ersten Ressourcenmanager in den zweiten Knoten importierten inkrementellen Daten zu verifizieren.

7. Clustermanager nach Anspruch 6, wobei das zweite Anweisungsmodul Folgendes umfasst:
eine Erfassungseinheit, die dazu konfiguriert ist, ein logisches Transaktionsprotokoll des zweiten Knotens entsprechend den inkrementellen Daten zu erfassen, nachdem die Teil-Originaldaten in den zweiten Knoten importiert wurden, wobei das logische Transaktionsprotokoll zum Beschreiben von Informationen der im zweiten Knoten gespeicherten Teil-Originaldaten verwendet wird; und
eine Sendeeinheit, die dazu konfiguriert ist, eine inkrementelle Anweisung gemäß dem logischen Transaktionsprotokoll an den ersten Ressourcenmanager zu senden, wobei die inkrementelle Anweisung zum Anweisen des ersten Ressourcenmanagers gemäß dem logischen Transaktionsprotokoll, die inkrementellen Daten zu bestimmen, die während des Aufteilungs- und Importprozesses in dem ersten Knoten gespeichert sind, und zum Importieren der inkrementellen Daten in den zweiten Knoten entsprechend den inkrementellen Daten verwendet wird.

8. Ressourcenmanager in einer verteilten Datenbank, umfassend:
ein zweites Empfangsmodul (92), das dazu konfiguriert ist, eine Datenumverteilungsanweisung von einem Clustermanager in der verteilten Datenbank zu empfangen;
ein erstes Importmodul (94), das dazu konfiguriert ist, Originaldaten, die in einem ersten Knoten gespeichert sind, gemäß der Datenumverteilungsanweisung aufzuteilen und alle aufgeteilten Teil-Originaldaten in einen entsprechenden zweiten Knoten zu importieren;
ein drittes Empfangsmodul (96), das dazu konfiguriert ist, eine inkrementelle Anweisung von dem Clustermanager zu empfangen;
ein zweites Importmodul (98), das dazu konfiguriert ist, inkrementelle Daten, die während des Aufteilungs- und Importprozesses in dem ersten Knoten gespeichert sind, gemäß der inkrementellen Anweisung in einen entsprechenden zweiten Knoten zu importieren; und
ein zweites Verarbeitungsmodul, das dazu konfiguriert ist, nach dem Importieren der inkrementellen Daten, die während des Teilungs- und Importprozesses in dem ersten Knoten gespeichert sind, in den zweiten Knoten entsprechend den inkrementellen Daten gemäß der inkrementellen Anweisung, einen ersten Prüfwert der inkrementellen Daten, eine Importzeit der inkrementellen Daten und ein Importergebnis des Importierens der inkrementellen Daten in den zweiten Knoten zu bestimmen; und den ersten Prüfwert, die Importzeit und das Importergebnis an den Clustermanager zu senden;
ein drittes Verarbeitungsmodul, das zu Folgendem konfiguriert ist:
Empfangen einer Anweisung zum inkrementellen Neuimportieren von dem Clustermanager nach dem Senden des ersten Prüfwerts, der Importzeit und des Importergebnisses an den Clustermanager und Wiederholen des Prozesses zum Importieren der inkrementellen Daten in den zweiten Knoten entsprechend den inkrementellen Daten gemäß der Anweisung zum inkrementellen Neuimportieren;
Empfangen einer Stoppanweisung von dem Clustermanager, Stoppen des ersten Knotens, der neue Daten speichert, gemäß der Stoppanweisung und Importieren von Daten, die in dem ersten Knoten gespeichert sind und nicht in einen entsprechenden zweiten Knoten importiert wurden, in den entsprechenden zweiten Knoten; und
Empfangen einer Anweisung zur Wiederholung des Importierens von dem Clustermanager; und Zurückkehren zu dem Schritt des Importierens der Daten, die in dem ersten Knoten gespeichert sind und nicht in den entsprechenden zweiten Knoten importiert wurden, in den entsprechenden zweiten Knoten gemäß der Anweisung zur Wiederholung des Importierens und Durchführen des Schritts, bis die zum Importieren der Daten, die nicht in den entsprechenden zweiten Knoten importiert wurden, in den entsprechenden zweiten Knoten benötigte Zeit geringer als der vorbestimmte Schwellenwert ist;
wobei der erste Prüfwert der inkrementellen Daten durch Folgendes berechnet wird: Erfassen eines Datenbanktransaktionsprotokolls des ersten Knotens gemäß einer beim letzten Mal gesicherten oder beim letzten Mal wiedergegebenen Position, Erhalten von Angaben in strukturierter Abfragesprache (SQL) durch Filtern des Datenbanktransaktionsprotokolls und Erfassen der inkrementellen Daten durch Verwenden der SQL-Angaben, um den ersten Prüfwert zu berechnen;
wobei die Importzeit der inkrementellen Daten die Zeit ist, die zum Importieren der in dem ersten Knoten gespeicherten inkrementellen Daten in den entsprechenden zweiten Knoten aufgebracht wird;
wobei das Importergebnis verwendet wird, um anzugeben, ob das Importieren der in dem ersten Knoten gespeicherten inkrementellen Daten in den entsprechenden zweiten Knoten erfolgreich ist;
wobei der erste Prüfwert der inkrementellen Daten durch den Clustermanager verwendet wird, um die Datenintegrität der von dem ersten Ressourcenmanager in den zweiten Knoten importierten inkrementellen Daten zu verifizieren.

9. Datenverarbeitungssystem, umfassend einen Clustermanager nach einem der Ansprüche 6-7 und einen ersten Ressourcenmanager nach Anspruch 8, wobei der Clustermanager mit dem ersten Ressourcenmanager verbunden ist.

## Revendications

1. Procédé de traitement de données, appliqué à une base de données distribuée comprenant un gestionnaire de grappe et au moins un gestionnaire de ressources, dans lequel le procédé est exécuté par le gestionnaire de grappe et comprend :
la réception (S202) d'une demande de redistribution de données ;
le fait d'ordonner (S204), selon la demande de redistribution de données, à un premier gestionnaire de ressources de diviser les données d'origine stockées dans un premier noeud et
d'importer chaque sous-donnée d'origine divisée dans un second noeud correspondant, dans lequel le premier gestionnaire de ressources est configuré pour gérer les données stockées dans le premier noeud ;
le fait d'ordonner (S206) au premier gestionnaire de ressources d'importer des données incrémentielles, qui sont stockées dans le premier noeud pendant les processus de division et
d'importation, dans un second noeud correspondant ; dans lequel les données incrémentielles d'importation sont déterminées par le premier gestionnaire de ressources après que chaque sous-donnée d'origine divisée a été importée dans le second noeud correspondant ; et
la réception d'une première valeur de contrôle, d'un temps d'importation et d'un résultat d'importation des données incrémentielles qui sont envoyées depuis le premier gestionnaire de ressources, et la réception d'une seconde valeur de contrôle des données incrémentielles qui sont envoyées depuis un second gestionnaire de ressources, dans lequel le second gestionnaire de ressources est configuré pour gérer les données stockées dans le second noeud ;
en réponse à la détermination que le résultat d'importation est réussi, le fait de déterminer si la première valeur de contrôle et la seconde valeur de contrôle sont identiques ; et
la réalisation des processus suivants :
en réponse à la détermination que la première valeur de contrôle et la seconde valeur de contrôle sont différentes, le fait d'ordonner à nouveau au premier gestionnaire de ressources d'importer les données incrémentielles dans le second noeud correspondant ;
en réponse à la détermination que la première valeur de contrôle et la seconde valeur de contrôle sont identiques, le fait de déterminer si le temps d'importation est inférieur à un seuil prédéterminé ;
en réponse à la détermination que le temps d'importation est inférieur au seuil prédéterminé, la commande du premier noeud de ne pas stocker de nouvelles données et le fait d'ordonner au premier gestionnaire de ressources d'importer des données qui sont stockées dans le premier noeud et non importées dans le second noeud dans le second noeud correspondant ; et
en réponse à la détermination que le temps d'importation est supérieur ou égal au seuil prédéterminé, le retour à l'étape consistant à ordonner au premier gestionnaire de ressources d'importer les données qui sont stockées dans le premier noeud et non importées dans le second noeud correspondant dans le second noeud correspondant, et l'exécution de manière répétée de l'étape jusqu'à ce que le temps nécessaire pour importer les données qui ne sont pas importées dans le second noeud correspondant dans le second noeud correspondant est inférieur au seuil prédéterminé ;
dans lequel la première valeur de contrôle des données incrémentielles est calculée par le premier gestionnaire de ressources via : l'acquisition d'un journal de transactions de base de données du premier noeud selon une position sauvegardée la dernière fois ou lue la dernière fois, l'obtention d'instructions en langage de requête structuré, SQL, par filtrage du journal de transactions de base de données et l'acquisition des données incrémentielles à l'aide des instructions SQL pour calculer la première valeur de contrôle, et
la seconde valeur de contrôle des données incrémentielles est calculée par le second gestionnaire de ressources par : la génération d'instructions de requête SQL pour interroger des données dans le second noeud selon une demande de contrôle de données incrémentielles, l'acquisition des données incrémentielles en utilisant les instructions SQL générées pour calculer la seconde valeur de contrôle ;
dans lequel le temps d'importation des données incrémentielles est le temps utilisé pour importer les données incrémentielles stockées dans le premier noeud dans le second noeud correspondant ;
dans lequel le résultat d'importation est utilisé pour indiquer si l'importation des données incrémentielles stockées dans le premier noeud dans le second noeud correspondant est réussie ;
dans lequel la première valeur de contrôle et la seconde valeur de contrôle des données incrémentielles sont utilisées par le gestionnaire de grappe pour vérifier l'intégrité des données des données incrémentielles importées du premier gestionnaire de ressources dans le second noeud.

2. Procédé selon la revendication 1, dans lequel le fait d'ordonner au premier gestionnaire de ressources d'importer les données incrémentielles, qui sont stockées dans le premier noeud pendant les processus de division et d'importation dans le second noeud correspondant comprend :
l'acquisition d'un journal de transactions logique du second noeud correspondant aux données incrémentielles après que les sous-données d'origine ont été importées dans le second noeud,
dans lequel le journal de transactions logique est utilisé pour décrire des informations des sous-données d'origine stockées dans le second noeud ; et
l'envoi, selon le journal de transactions logique, d'une instruction incrémentielle au premier gestionnaire de ressources, dans lequel l'instruction incrémentielle est utilisée pour ordonner au premier gestionnaire de ressources de déterminer, selon le journal de transactions logique, les données incrémentielles qui sont stockées dans le premier noeud pendant les processus de division et d'importation, et importer les données incrémentielles dans le second noeud correspondant.

3. Procédé de traitement de données, appliqué à une base de données distribuée comprenant un gestionnaire de grappe et au moins un gestionnaire de ressources, dans lequel le procédé est exécuté par le gestionnaire de ressources et comprend :
la réception (S302) d'une instruction de redistribution de données envoyée par un gestionnaire de grappe ;
la division (S304), selon l'instruction de redistribution de données, de données d'origine stockées dans un premier noeud et l'importation de chaque sous-donnée d'origine divisée dans un second noeud correspondant ;
la réception (S306) d'une instruction incrémentielle envoyée par le gestionnaire de grappe ;
l'importation (S308), selon l'instruction incrémentielle, de données incrémentielles qui sont stockées dans le premier noeud pendant les processus de division et d'importation dans un second noeud correspondant ;
la détermination d'une première valeur de contrôle des données incrémentielles, d'un temps d'importation des données incrémentielles et d'un résultat d'importation de l'importation des données incrémentielles dans le second noeud ;
l'envoi de la première valeur de contrôle, du temps d'importation et du résultat d'importation au gestionnaire de grappe ;
après l'envoi de la première valeur de contrôle, le temps d'importation et le résultat d'importation au gestionnaire de grappe, comprenant en outre :
la réception d'une instruction de réimportation incrémentielle du gestionnaire de grappe, et la répétition, selon l'instruction de réimportation incrémentielle, d'un processus d'importation des données incrémentielles dans le second noeud correspondant ;
la réception d'une instruction d'arrêt du gestionnaire de grappe, l'arrêt du premier noeud stockant de nouvelles données selon l'instruction d'arrêt, et l'importation de données qui sont stockées dans le premier noeud et n'ont pas été importées dans un second noeud correspondant dans le second noeud correspondant ; et
la réception d'une instruction d'importation de répétition du gestionnaire de grappe ; et le retour, selon l'instruction d'importation de répétition, à l'étape d'importation des données qui sont stockées dans le premier noeud et n'ont pas été importées dans le second noeud correspondant dans le second noeud correspondant, et l'exécution répétée de l'étape jusqu'à ce que le temps nécessaire pour importer les données qui n'ont pas été importées dans le second noeud correspondant dans le second noeud correspondant est inférieur à un seuil prédéterminé ;
dans lequel la première valeur de contrôle des données incrémentielles est calculée par le premier gestionnaire de ressources via : l'acquisition d'un journal de transactions de base de données du premier noeud selon une position sauvegardée la dernière fois ou lue la dernière fois, l'obtention d'instructions en langage de requête structuré, SQL, par filtrage du journal de transactions de base de données et l'acquisition des données incrémentielles à l'aide des instructions SQL pour calculer la première valeur de contrôle ;
dans lequel le temps d'importation des données incrémentielles est le temps utilisé pour importer les données incrémentielles stockées dans le premier noeud dans le second noeud correspondant ;
dans lequel le résultat d'importation est utilisé pour indiquer si l'importation des données incrémentielles stockées dans le premier noeud dans le second noeud correspondant est réussie ;
dans lequel la première valeur de contrôle des données incrémentielles est utilisée par le gestionnaire de grappe pour vérifier l'intégrité des données des données incrémentielles importées du premier gestionnaire de ressources dans le second noeud.

4. Procédé selon la revendication 3, dans lequel la division, selon l'instruction de redistribution de données, des données d'origine stockées dans le premier noeud et l'importation de chaque sous-donnée originale divisée dans le second noeud correspondant comprend :
l'exportation, selon l'instruction de redistribution de données, des données d'origine du premier noeud ;
la division, selon une règle de distribution de données, des données d'origine en une pluralité de fichiers, dans lequel chacun de la pluralité de fichiers correspond à l'un respectif des seconds noeuds ; et
le téléchargement de la pluralité de fichiers vers les seconds noeuds correspondant à la pluralité de fichiers séparément pour effectuer l'importation.

5. Procédé selon la revendication 3, dans lequel l'importation, selon l'instruction incrémentielle, des données incrémentielles qui sont stockées dans le premier noeud pendant les processus de division et d'importation dans le second noeud correspondant comprend :
la détermination des données incrémentielles selon un journal de transactions logique porté par l'instruction incrémentielle, dans lequel le journal de transactions logique est utilisé pour décrire les informations des sous-données d'origine stockées dans le second noeud ;
la génération d'une instruction en langage de manipulation de données, DML, selon les données incrémentielles ; et
l'importation des données incrémentielles dans le second noeud correspondant à l'aide de l'instruction DML.

6. Gestionnaire de grappe dans une base de données distribuée, comprenant :
un premier module de réception (82), qui est configuré pour recevoir une demande de redistribution de données ;
un premier module d'instruction (84), qui est configuré pour ordonner, selon la demande de redistribution de données, à un premier gestionnaire de ressources dans la base de données distribuée de diviser des données d'origine stockées dans un premier noeud et d'importer chaque sous-donnée d'origine divisée dans un second noeud correspondant, dans lequel le premier gestionnaire de ressources est configuré pour gérer les données stockées dans le premier noeud ;
un second module d'instruction (86), qui est configuré pour ordonner au premier gestionnaire de ressources d'importer des données incrémentielles qui sont stockées dans le premier noeud pendant les processus de division et d'importation dans un second noeud correspondant ; dans lequel les données incrémentielles d'importation sont déterminées par le premier gestionnaire de ressources après que chaque sous-donnée d'origine divisée a été importée dans le second noeud correspondant ; et
un premier module de traitement, qui est configuré pour :
recevoir, après avoir ordonné au premier gestionnaire de ressources d'importer les données incrémentielles qui sont stockées dans le premier noeud pendant les processus de division et d'importation dans le second noeud correspondant aux données incrémentielles, une première valeur de contrôle, un temps d'importation et un résultat d'importation des données incrémentielles du premier gestionnaire de ressources, et recevoir une seconde valeur de contrôle des données incrémentielles d'un second gestionnaire de ressources dans la base de données distribuée, dans lequel le second gestionnaire de ressources est configuré pour gérer des données stockées dans le second noeud ;
en réponse à la détermination que le résultat d'importation est réussi, déterminer si la première valeur de contrôle et la seconde valeur de contrôle sont identiques ; et
réaliser les processus suivants :
en réponse à la détermination que la première valeur de contrôle et la seconde valeur de contrôle sont différentes, ordonner à nouveau au premier gestionnaire de ressources d'importer les données incrémentielles dans le second noeud correspondant ;
en réponse à la détermination que la première valeur de contrôle et la seconde valeur de contrôle sont identiques, déterminer si le temps d'importation est inférieur à un seuil prédéterminé ;
en réponse à la détermination que le temps d'importation est inférieur au seuil prédéterminé, commander au premier noeud de ne pas stocker de nouvelles données et ordonner au premier gestionnaire de ressources d'importer des données qui sont stockées dans le premier noeud et non importées dans le second noeud dans le second noeud correspondant ; et
en réponse à la détermination que le temps d'importation est supérieur ou égal au seuil prédéterminé, retourner à l'étape consistant à ordonner au premier gestionnaire de ressources d'importer les données qui sont stockées dans le premier noeud et non importées dans le second noeud correspondant dans le second noeud correspondant, et exécuter de manière répétée l'étape jusqu'à ce que le temps nécessaire pour importer les données qui ne sont pas importées dans le second noeud correspondant dans le second noeud correspondant est inférieur au seuil prédéterminé ;
dans lequel la première valeur de contrôle des données incrémentielles est calculée par le premier gestionnaire de ressources via : l'acquisition d'un journal de transactions de base de données du premier noeud selon une position sauvegardée la dernière fois ou lue la dernière fois, l'obtention d'instructions en langage de requête structuré, SQL, par filtrage du journal de transactions de base de données et l'acquisition des données incrémentielles à l'aide des instructions SQL pour calculer la première valeur de contrôle, et
la seconde valeur de contrôle des données incrémentielles est calculée par le second gestionnaire de ressources par : la génération d'instructions SQL pour interroger des données dans le second noeud selon une demande de contrôle de données incrémentielles, l'acquisition des données incrémentielles en utilisant les instructions SQL générées pour calculer la seconde valeur de contrôle ;
dans lequel le temps d'importation des données incrémentielles est le temps utilisé pour importer les données incrémentielles stockées dans le premier noeud dans le second noeud correspondant ;
dans lequel le résultat d'importation est utilisé pour indiquer si l'importation des données incrémentielles stockées dans le premier noeud dans le second noeud correspondant est réussie ;
dans lequel la première valeur de contrôle et la seconde valeur de contrôle des données incrémentielles sont utilisées par le gestionnaire de grappe pour vérifier l'intégrité des données des données incrémentielles importées du premier gestionnaire de ressources dans le second noeud.

7. Gestionnaire de grappe selon la revendication 6, dans lequel le second module d'instruction comprend :
une unité d'acquisition, qui est configurée pour acquérir un journal de transactions logique du second noeud correspondant aux données incrémentielles après que les sous-données d'origine ont été importées dans le second noeud, dans lequel le journal de transactions logique est utilisé pour décrire des informations des sous-données d'origine stockées dans le second noeud ; et
une unité d'envoi, qui est configurée pour envoyer, selon le journal de transactions logique, une instruction incrémentielle au premier gestionnaire de ressources, dans lequel l'instruction incrémentielle est utilisée pour ordonner au premier gestionnaire de ressources, selon le journal de transactions logique, de déterminer les données incrémentielles qui sont stockées dans le premier noeud pendant les processus de division et d'importation, et importer les données incrémentielles dans le second noeud correspondant aux données incrémentielles.

8. Gestionnaire de ressources dans une base de données distribuée, comprenant :
un deuxième module de réception (92), qui est configuré pour recevoir une instruction de redistribution de données d'un gestionnaire de grappe dans la base de données distribuée ;
un premier module d'importation (94), qui est configuré pour diviser, selon l'instruction de redistribution de données, des données d'origine stockées dans un premier noeud et importer chaque sous-donnée d'origine divisée dans un second noeud correspondant ;
un troisième module de réception (96), qui est configuré pour recevoir une instruction incrémentielle du gestionnaire de grappe ;
un second module d'importation (98), qui est configuré pour importer, selon l'instruction incrémentielle, des données incrémentielles qui sont stockées dans le premier noeud pendant les processus de division et d'importation dans un second noeud correspondant ; et
un deuxième module de traitement, qui est configuré pour déterminer, après importation des données incrémentielles qui sont stockées dans le premier noeud pendant les processus de division et d'importation dans le second noeud correspondant aux données incrémentales selon l'instruction incrémentale, une première valeur de contrôle des données incrémentielles, un temps d'importation des données incrémentielles et un résultat d'importation de l'importation des données incrémentielles dans le second noeud ; et envoyer la première valeur de contrôle, le temps d'importation et le résultat d'importation au gestionnaire de grappe ;
un troisième module de traitement, qui est configuré pour :
recevoir une instruction de réimportation incrémentielle du gestionnaire de grappe après avoir envoyé la première valeur de contrôle, le temps d'importation et le résultat de l'importation au gestionnaire de grappe, et répéter, selon l'instruction de réimportation incrémentielle, le processus d'importation des données incrémentielles dans le second noeud correspondant aux données incrémentales ;
recevoir une instruction d'arrêt du gestionnaire de grappe, arrêter le premier noeud stockant de nouvelles données selon l'instruction d'arrêt, et importer des données qui sont stockées dans le premier noeud et n'ont pas été importées dans un second noeud correspondant dans le second noeud correspondant ; et
recevoir une instruction d'importation de répétition du gestionnaire de grappe ; et retourner, selon l'instruction d'importation de répétition, à l'étape d'importation des données qui sont stockées dans le premier noeud et n'ont pas été importées dans le second noeud correspondant dans le second noeud correspondant, et l'exécution répétée de l'étape jusqu'à que le temps nécessaire pour importer les données qui n'ont pas été importées dans le second noeud correspondant dans le second noeud correspondant est inférieur à un seuil prédéterminé ;
dans lequel la première valeur de contrôle des données incrémentielles est calculée par : l'acquisition d'un journal de transactions de base de données du premier noeud selon une position sauvegardée la dernière fois ou lue la dernière fois, l'obtention d'instructions en langage de requête structuré, SQL, par filtrage du journal de transactions de base de données et l'acquisition des données incrémentielles à l'aide des instructions SQL pour calculer la première valeur de contrôle ;
dans lequel le temps d'importation des données incrémentielles est le temps utilisé pour importer les données incrémentielles stockées dans le premier noeud dans le second noeud correspondant ;
dans lequel le résultat d'importation est utilisé pour indiquer si l'importation des données incrémentielles stockées dans le premier noeud dans le second noeud correspondant est réussie ;
dans lequel la première valeur de contrôle des données incrémentielles est utilisée par le gestionnaire de grappe pour vérifier l'intégrité des données des données incrémentielles importées du premier gestionnaire de ressources dans le second noeud.

9. Système de traitement de données, comprenant un gestionnaire de grappe selon l'une quelconque des revendications 6 à 7 et un premier gestionnaire de ressources selon la revendication 8, dans lequel le gestionnaire de grappe est connecté au premier gestionnaire de ressources.
